# EUROPÄISCHE PATENTSCHRIFT

(11) **EP 2 422 297 B1**
(45) Veröffentlichungstag und Bekanntmachung des Hinweises auf die Patenterteilung: **20.03.2013**
(21) Anmeldenummer: 10726028.3
(22) Anmeldetag: 28.05.2010
(51) Int. Cl.: H04N 5/232

(54) **VORRICHTUNG UND VERFAHREN ZUM ERFASSEN EINER PFLANZE**
DEVICE AND METHOD FOR RECORDING A PLANT
DISPOSITIF ET PROCÉDÉ DE PRISE DE VUE D'UNE PLANTE

(30) Priorität: 04.06.2009 DE 102009023896; 05.06.2009 US 184560 P
(43) Veröffentlichungstag der Anmeldung: 29.02.2012
(73) Patentinhaber: Fraunhofer Gesellschaft zur Förderung der angewandten Wissenschaft E.V., 80686 München (DE)
(72) Erfinder: SCHMITT, Peter, 91058 Erlangen (DE); UHRMANN, Franz, 91056 Erlangen (DE); SCHOLZ, Oliver, 91096 Möhrendorf (DE); KOSTKA, Günther, 91056 Erlangen (DE); GOLDSTEIN, Ralf, 91056 Erlangen (DE); SEIFERT, Lars, 92318 Neumarkt (DE)
(74) Vertreter: Zinkler, Franz
(86) Internationale Anmeldenummer: PCT/EP2010/057449
(87) Internationale Veröffentlichungsnummer: WO 2010/139628

(56) Entgegenhaltungen:
- BOURBAKIS N ET AL: "Fusing laser and image data for 3D perceived space representations" TOOLS WITH ARTIFICIAL INTELLIGENCE, 1997. PROCEEDINGS., NINTH IEEE INT ERNATIONAL CONFERENCE ON NEWPORT BEACH, CA, USA 3-8 NOV. 1997, LOS ALAMITOS, CA, USA,IEEE COMPUT. SOC, US LNKD- DOI:10.1109/TAI.1997.632236, 3. November 1997 (1997-11-03), Seiten 50-58, XP010254303 ISBN: 978-0-8186-8203-2
- SCHENK T ET AL: "Fusing Imagery and 3D Point Clouds for Reconstructing Visible Surfaces of Urban Scenes" URBAN REMOTE SENSING JOINT EVENT, 2007, IEEE, PI LNKD- DOI:10.1109/URS.2007.371861, 1. April 2007 (2007-04-01), Seiten 1-7, XP031177683 ISBN: 978-1-4244-0711-8

## Beschreibung

Die vorliegende Erfindung bezieht sich auf die Erfassung von Pflanzen und insbesondere auf die optische Erfassung von Pflanzen, die auf einem Feld, in einem Gewächshaus oder auf einem Acker eingepflanzt sind.

Die Erfassung von Pflanzen ist in der Agrartechnik von Bedeutung, wobei hier die sogenannte Phenotypisierung von Pflanzen zu nennen ist. Ein weiteres Beispiel für die Erfassung besteht in der Identifizierung von Pflanzen, um beispielsweise ein automatisches Jäten von unerwünschten Pflanzen, d.h. Beikräutern zu ermöglichen.

Für die dreidimensionale Erfassung von Objekten sind verschiedene Verfahren gebräuchlich, wie beispielsweise Streifenlichtverfahren oder Lichtschnittverfahren. Diese Verfahren bieten eine hohe räumliche dreidimensionale Auflösung. Sie sind jedoch bezüglich der Beleuchtung auf definierte Umgebungsbedingungen angewiesen. Ein weiterer Nachteil ist, dass die dreidimensionale Erfassung nicht in sehr kurzer Zeit erfolgen kann.

Beim Streifenlichtverfahren müssen nacheinander verschiedene Lichtmuster auf das Objekt projiziert werden, während beim Lichtschnittverfahren zu einem gegebenen Zeitpunkt nur eine Höhenlinie erfasst wird. Das Objekt muss also zur dreidimensionalen Erfassung abgescannt werden.

Um die definierten Lichtbedingungen auf einem Acker bzw. Feld zu erzeugen, kann man ein Zelt aufbauen, das das Umgebungslicht von dem zu erfassenden Bereich abhält. Dann kann in diesem lichtdichten Zelt eine definierte Umgebungsbedingung hergestellt werden, um das Lichtschnittverfahren bzw. das Streifenlichtverfahren anzuwenden. Wenn ein bestimmter Bereich, der innerhalb des Zelts vorhanden ist, erledigt ist, muss das Zelt abgebaut werden, und an einer anderen Stelle wieder aufgebaut werden, bevor dann an dieser anderen Stelle das Lichtschnittverfahren bzw. das Streifenlichtverfahren angewendet werden kann.

Diese Vorgehensweise ist zeitaufwendig und damit teuer. Außerdem ist sie nicht zur dreidimensionalen Erfassung von größeren Flächen geeignet, weil dieses Prozedere zu langsam ist. Um einen ausreichenden Durchsatz zu erreichen, müssten sehr viele Lichtschnitt-Teams parallel arbeiten, was viele Zelte, viele Lichtschnitt-Kameras und damit auch einen hohen Bedarf an ausgebildeten Fachkräften erforderlich macht, was alles zu einer Erhöhung der Kosten führt.

Andererseits ist es besonders bei der Entwicklung von Pflanzensaaten von hoher Bedeutung, in regelmäßigen Abständen, wie beispielsweise alle ein bis zwei Wochen eine objektive Beurteilung der von einem Saatgut erzeugten Keimlinge zu erhalten, ohne dass diese Keimlinge zerstört werden. Es sei darauf hingewiesen, dass hier, als Testäcker, Felder eingesetzt werden sollten, die eine Mindestgröße haben, um einigermaßen realistische Wachstumsbedingungen zu haben. Daher werden, wenn große Anbauflächen für ein Saatgut beabsichtigt werden, auch relativ große Testflächen benötigt.

Neben Testflächen mit beachtlicher Größe werden auch genaue Daten über die Ausrichtung von Pflanzenblättern im Raum, zur Größe der Pflanzenblätter, zur Struktur der Pflanzenblätter, etc. benötigt, um eine genaue Information über ein bestimmtes Saatgut zu erhalten. Um diese Informationen zuverlässig zu erhalten, wenn die Pflanzen nicht ausgerissen werden dürfen, ist eine dreidimensionale Erfassung notwendig, da im Falle einer zweidimensionalen Erfassung lediglich Projektionen bzw. Silhouetten von Blättern erfasst werden, deren Ausrichtung nicht ermittelt werden kann, und deren wahre Fläche ebenfalls nicht ermittelt werden kann, weil aus einer Projektion ohne Kenntnis über die Ausrichtung der projizierten Fläche nicht auf die Fläche selbst geschlossen werden kann.

Die Fachveröffentlichung "Fusing Laser and Image Data for 3D Perceived Space Representations", N. Bourbakis, et al., Proc. IEEE 9' th Intl. Conf. On Tools with Artificial Intelligence pp. 50-58, 1997, offenbart eine Fusionstechnik für eine dreidimensionale Repräsentation des Raums. Die Technik basiert auf einem Fusionsprozess, der Laserabstandsdaten und segmentierte Bilddaten mit menschlicher Erfahrung, die auf die Umgebung bezogen ist, betrifft. Die Abstandsdaten können Rauschen aufgrund von Reflexionen an geneigten Oberflächen oder aufgrund von offenen Korridoren mit langem Abstand umfassen. Das Rauschen wird unter Verwendung menschlicher Erfahrung aus den dreidimensionalen Umgebungen entfernt.

Die Fachveröffentlichung "Image-based Plant Modeling", Quan, ACM Trans. Graph., pp. 599-604, 2006 beschreibt eine bildbasierte Modellierung von Pflanzenblättern, welches eine gemeinsame Benutzung von zweidimensionalen und dreidimensionalen Daten vorsieht, wobei die dreidimensionalen Informationen aus einem "structure from motion"-Verfahren bestimmt wird und die zweidimensionalen Bildinformationen auf den dreidimensionalen Daten zum Liegen kommen.

Die Aufgabe der vorliegenden Erfindung besteht darin, ein effizienteres Konzept zum Erfassen einer Pflanze zu schaffen.

Diese Aufgabe wird durch eine Vorrichtung zum Erfassen einer Pflanze gemäß Patentanspruch 1, ein Verfahren zum Erfassen einer Pflanze gemäß Patentanspruch 18 oder ein Computerprogramm gemäß Patentanspruch 19 gelöst.

Der vorliegenden Erfindung liegt die Erkenntnis zugrunde, dass eine genaue dreidimensionale Erfassung einer Pflanze, die schnell und damit effizient und möglichst ohne zusätzlichen Aufwand, wie beispielsweise definierte Lichtbedingungen, erreicht werden kann, wenn die sehr weit entwickelte hochauflösende zweidimensionale Erfassung mittels z.B. einer Digitalkamera verwendet wird, aber zusätzlich grob aufgelöste dreidimensionale Bilder erzeugt werden, die aufgrund der nur benötigten geringen Auflösung schnell und effizient gewonnen werden können.

Diese dreidimensionalen Bilder müssen lediglich eine geringe Auflösung haben, was bedeutet, dass die Anzahl der Punkte im dreidimensionalen Bild, für die es Informationen über die dritte Dimension gibt, welche beispielsweise die Entfernung des Punkts zum Kameraobjektiv sein kann, relativ klein ist.

Diese grobaufgelöste dreidimensionale Darstellung kann jedoch wesentlich schneller als eine feinaufgelöste dreidimensionale Darstellung erfasst werden.

Vorzugsweise wird eine grobe dreidimensionale Erfassung ohne definierte Umgebungslichtbedingungen eingesetzt. Hierzu eignen sich z. B. TOF-Kameras (TOF = time-of-flight), da diese unter normalen Umgebungsbedingungen und in hoher Geschwindigkeit grobaufgelöste dreidimensionale Bilder aufnehmen können.

Ein Prozessor ist vorgesehen um das zweidimensionale Bild und das dreidimensionale Bild zu fusionieren, um eine dreidimensionale Ergebnisdarstellung zu erhalten, die eine höhere Auflösung als das dreidimensionale Bild der dreidimensionalen Kamera aufweist, wobei die zusätzlichen Punkte mit dreidimensionalen Informationen unter Verwendung des hochaufgelösten zweidimensionalen Bildes ermittelt worden sind.

Zur Fusion der zweidimensionalen Daten und der dreidimensionalen Daten können verschiedene Algorithmen verwendet werden, wie beispielsweise Algorithmen, die auf einer dreidimensionalen Grobrekonstruktion basieren und unter Verwendung der hochaufgelösten zweidimensionalen Darstellung die grobaufgelöste dreidimensionale Rekonstruktion verfeinern.

Andere Algorithmen, die auf Vorwissen über die zu erfassenden Pflanzen basieren, verwenden die hochaufgelöste zweidimensionale Darstellung, um eine parametrisierte dreidimensionale Darstellung, die dem zweidimensional aufgenommenen Objekt entspricht, aus einer Modelldatenbank zu extrahieren, wobei dann unter Verwendung der grobaufgelösten dreidimensionalen Darstellung und gegebenenfalls unter Verwendung der hoch aufgelösten zweidimensionalen Darstellung einer oder mehrere Parameter der parametrisierten dreidimensionalen Darstellung aus der Modelldatenbank für die tatsächlich aufgenommene Pflanze bzw. das tatsächlich aufgenommene Pflanzenblatt z.B. durch numerische Verfahren berechnet werden.

Wieder andere Algorithmen basieren darauf, dass eine Interpolation zwischen dreidimensional gemessenen Stützstellen auf einem Vergleich einer Projektion der dreidimensionalen Interpolation mit der zweidimensionalen aufgezeichneten Silhouette oder basierend auf einer mehrdeutigen dreidimensionalen Rekonstruktion der zweidimensional aufgenommenen Silhouette durchgeführt werden, um in einem Schritt oder mittels eines iterativen Verfahrens die Interpolation zwischen den grobaufgezeichneten dreidimensionalen Schnittstellen zu verbessern, um eine verbesserte dreidimensionale Darstellung zu erhalten.

Die vorliegende Erfindung ist dahingehend vorteilhaft, dass die Anforderungen an die dreidimensionale Aufzeichnung gering sind, was es ermöglicht, zur dreidimensionalen Erfassung schnelle Erfassungskonzepte und vorzugsweise auch Erfassungskonzepte zu verwenden, die keine definierten Umgebungsbedingungen brauchen.

Dagegen ist die zweidimensionale hochaufgelöste Erfassung, die vorzugsweise eine Farberfassung ist, ausgereift, bis zu dem Maß, dass extrem schnelle, extrem scharfe und extrem hochaufgelöste rauscharme Bilder bereits mit preisgünstig erhältlichen handelsüblichen Digitalkameras aufgezeichnet werden können.

Damit ermöglicht die vorliegende Erfindung eine schnelle und dennoch ausreichend genaue Aufzeichnung von Pflanzen, die einfach dadurch erreicht werden kann, dass die beiden Erfassungskameras z.B. auf einem Traktor montiert werden. Der Traktor fährt mit durchgehender Geschwindigkeit über einen Acker oder ein Feld, wobei diese Geschwindigkeit aufgrund der schnellen Funktionalität der hochaufgelösten zweidimensionalen Kamera und der niedrigaufgelösten dreidimensionalen Kamera durchaus größer als 3 km/h sein kann. Durch eine hohe Wiederholfrequenz der Einzelbilderfassung kann sogar erreicht werden, dass jedes Pflanzenblatt bzw. jede Pflanzen auf mehreren Einzelbildern zu sehen ist, so dass eine verbesserte dreidimensionale Ergebnisdarstellung eines Pflanzenblattes im Vergleich zu dem Fall erreicht wird, bei dem von einem Pflanzenblatt nur eine einzige dreidimensionale Darstellung und einzige zweidimensionale Darstellung aus jeweils einer einzigen Perspektive vorhanden ist.

Es sei darauf hingewiesen, dass auch vorzugsweise mehr als ein zweidimensionale Kamera oder auch mehr als eine dreidimensionale Kamera eingesetzt werden können. Damit wird bereits an einer Position des Kamerasystems eine Menge von Bildern der Pflanze erhalten, wobei jedes Bild der Menge eine Pflanze aus einem anderen Winkel bzw. aus einer anderen Ansicht darstellt. Das Ergebnis ist also analog zu dem Ergebnis, das erhalten wird, wenn eine Pflanze aus mehreren Perspektiven aufgenommen wird, die sich daraus ergeben, dass sich das Kamerasystem zwischen jeder Aufnahme bewegt hat. Analog können auch Systeme eingesetzt werden, die sowohl über mehrere Kameras verfügen als auch sich bewegen.

Ein weiterer Vorteil der schnellen Erfassung besteht darin, dass die Belichtungszeiten der Kameras so gering sind, dass selbst Windbewegungen der Pflanzen im mittleren Bereich unkritisch sind. Auch Erschütterungen der Kameras bzw. Höhenänderungen der Kameras bezüglich der Blätter sind unkritisch. Vorzugsweise werden die beiden Kameras jedoch so zueinander befestigt, dass sie die selben Erschütterungen bzw. Höhenänderungen erfahren und einigermaßen synchronisiert fotografieren, obgleich selbst Bewegungen, wie Erschütterungen im Vergleich zur Belichtungszeit so langsam stattfinden, dass auch eine nicht-synchronisierte Belichtung der beiden Kameras, wenn überhaupt, zu einem vernachlässigbaren Fehler führt.

Erfindungsgemäß können somit große Felder schnell und mit relativ geringem Aufwand vermessen werden. Damit ermöglicht die vorliegende Erfindung eine preisgünstige Erfassung von Pflanzen, die sich insbesondere auch dafür anbietet, in geringen zeitlichen Abständen durchgeführt zu werden, weil dadurch weder die Pflanzen-Keimlinge (also die kleinen und empfindlichen Pflanzenaustriebe kurz nach der Keimung) bzw. Jungpflanzen zerstört werden noch besonders hohe Kosten noch einer hoher Zeitaufwand für eine Erfassung selbst eines Ackers bzw. Feldes mit beträchtlicher Fläche benötigt werden.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild einer bevorzugten Implementierung der Vorrichtung zum Erfassen einer Pflanze;
- Fig. 2a: eine bevorzugte Implementierung der erfindungsgemäßen Vorrichtung mit einem Fahrzeug, wie beispielsweise einem Traktor;
- Fig. 2b: eine Blockschaltbilddarstellung einer erfindungsgemäßen Vorrichtung mit einem nachgeschalteten Auswertungsprozessor zum Auswerten des von dem Fusionsprozessor erzeugten dreidimensionalen Ergebnisbildes;
- Fig. 3a: eine Flussdiagrammdarstellung einer bevorzugten Implementierung des Fusionsprozessors bzw. des Schritts des Fusionierens der zweidimensionalen Darstellung und der dreidimensionalen Darstellung;
- Fig. 3b: eine erläuternde Darstellung zur Funktionalität des Fusionsprozessors bzw. des Schritts des Fusionierens gemäß einem weiteren Ausführungsbeispiel;
- Fig. 4: eine alternative Implementierung des Fusionsprozessors bzw. des Schritts des Fusionierens; und
- Fig. 5a-5d: erläuternde Darstellungen zur Veranschaulichung einer alternativen Implementierung des Fusionsprozessors bzw. des Schritts des Fusionierens.

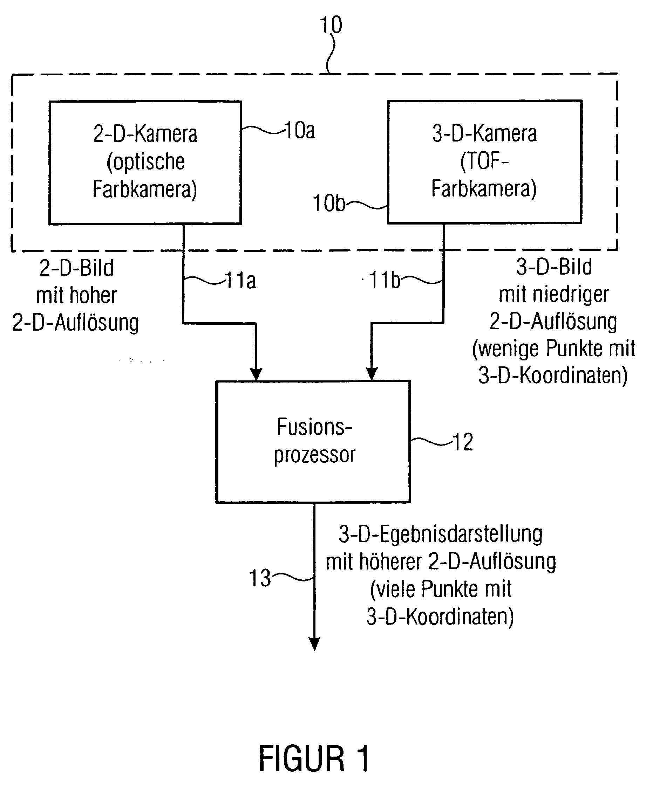

Fig. 1 zeigt eine Vorrichtung zum Erfassen einer Pflanze in einer schematischen Blockschaltbilddarstellung. Die Vorrichtung umfasst eine Einrichtung 10 zum Liefern mindestens eines zweidimensionalen Bildes eines Pflanzenblattes mit einer ersten zweidimensionalen Auflösung. Die Einrichtung 10 ist ferner implementiert, um auch mindestens ein dreidimensionales Bild des Pflanzenblattes zu liefern, wobei das dreidimensionale Bild eine zweidimensionale Darstellung des Pflanzenblattes mit einer zweiten zweidimensionalen Auflösung hat, die kleiner als die erste zweidimensionale Auflösung ist, und wobei für Punkte der zweidimensionalen Darstellung Informationen vorhanden sind, die eine dritte Dimension des dreidimensionalen Bildes darstellen.

Die Einrichtung 10 umfasst vorzugsweise eine 2-D-Kamera 10a zum Erfassen des zweidimensionalen Bildes mit einer hohen zweidimensionalen Auflösung auf einer Leitung 11a Die Einrichtung 10 zum Liefern umfasst ferner vorzugsweise eine 3-D-Kamera 10b zum Erfassen des dreidimensionalen Bildes des Pflanzenblattes und zur Ausgabe dieses Bildes auf einer Leitung 11b.

Die zweidimensionale Kamera 10a ist vorzugsweise eine optische Farbkamera, wie beispielsweise eine handelsübliche Digitalkamera, während die dreidimensionale Kamera vorzugsweise eine TOF-Kamera ist.

Solche TOF-Kameras sind inzwischen erhältlich. Diese TOF-Kameras liefern in kurzer Zeit eine Höheninformation des Messobjekts, wobei die je nach Entfernung von der Kamera unterschiedliche Lichtlaufzeit einer zusätzlichen Beleuchtungseinrichtung, in der Regel im nahen Infrarot, zur Entfernungsbestimmung genutzt wird. Solche TOF-Kameras haben eine geringe Pixelauflösung und vor allem eine geringe Entfernungsauflösung im Bereich von typisch mehreren Millimetern bis Zentimetern. In Blickrichtung dieser TOF-Kameras wird somit nur ein grobes Höhenbild des Messobjekts erzeugt.

Vom Zentrum für Sensorsysteme (ZESS) der Universität Siegen gibt es eine 2D/3D-Multi-Kamera, die auf einer monokularen Kombination eines PMD-Sensors nach dem Time-Of-Flight-Entfernungsmessprinzip und einem herkömmlichen zweidimensionalen CMOS-Sensor basiert. Der Entfernungssensor verwendet eine in der Kamera integrierte modulierte Infrarot-Koaxial-Lichtquelle. Das emittierte Licht wird durch die Szene reflektiert und dann durch die PMD-Matrix erfasst, wobei das einfallende Licht mit einem Referenzsignal korreliert wird. Darüber hinaus arbeitet der Intensitätssensor mit dem sichtbaren Spektrum (Tageslicht). Die gleichzeitige Erfassung beider Bilder wird durch den monokularen Aufbau der Kamera mit einem Strahlteiler erreicht. Der monokulare Aufbau garantiert auf mechanische Art und Weise eine einfache Bildausrichtung. Ein Datenblatt dieser Kamera ist über www.cess.uni-siegen.de erhältlich.

Die erfindungsgemäße Vorrichtung umfasst ferner einen Prozessor 12 zum Fusionieren des zweidimensionalen Bildes auf der Leitung 11a und des dreidimensionalen Bildes 11b, um eine dreidimensionale Ergebnisdarstellung auf einer Ausgangsleitung 13 zu erhalten, die eine höhere zweidimensionale Auflösung hat als das dreidimensionale Bild, das von der 3-D-Kamera 10b erfasst worden ist. Diese dreidimensionale Ergebnisdarstellung des Pflanzenblattes hat für eine Anzahl von Punkten dreidimensionale Informationen, wobei diese Anzahl größer ist als die Anzahl von Punkten des dreidimensionalen Bildes (der Leitung 11b), für die die Daten der dritten Dimension durch die Kamera 10b erfasst worden sind. Diese Daten der dritten Dimension sind beispielsweise Abstandsdaten von einem zweidimensionalen Punkt im 3-D-Bild zu einem Objektiv der 3-D-Kamera.

Der Prozessor kann eine Allzweck-CPU eines Personal-Computers oder aber ein speziell angepasster Graphikprozessor sein, der besonders für die benötigten Bildverarbeitungsroutinen angepasst ist. Der Prozessor umfasst eine ALU, Register und einen oder mehrer Datenbusse und ist ferner vorzugsweise an einen externen Speicher, Eingabe- bzw. Ausgabegeräte und z.B. ein Kommunikationsnetz koppelbar.

Anstatt einer optischen Farbkamera, wie beispielsweise einer handelsüblichen Digitalkamera können auch andere Kameras eingesetzt werden, die eine zweidimensionale Darstellung mit einer hohen Auflösung liefern.

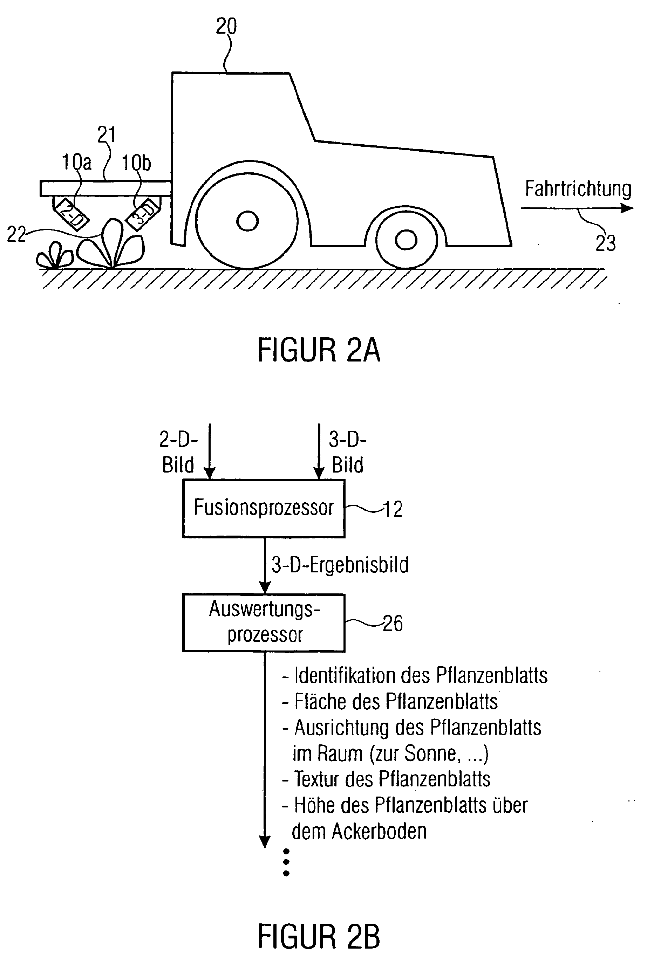

Darüber hinaus können auch statt der TOF-Kamera andere dreidimensionale Kameras eingesetzt werden, die nur eine geringe Auflösung brauchen. Besonders bevorzugt werden dreidimensionale Kameras, mit denen, wie es in Fig. 2a noch erläutert wird, eine durchgehende Erfassung von Pflanzen ohne definierte Umgebungsbedingungen und ohne Anhalten und Wiederstarten einer Bewegung erreicht werden kann.

Fig. 2a zeigt eine bevorzugte Implementierung der Vorrichtung zum Erfassen einer Pflanze, die neben den beiden Kameras 10a, 10b ein Fahrzeug 20, wie beispielsweise einen üblichen Traktor aufweist. Der Traktor 20 umfasst eine Befestigungseinrichtung 21, an der die beiden Kameras 10a, 10b angebracht sind. Die Kameras sind insbesondere so angebracht, dass sie in "Blickrichtung" zu einer Pflanze 22 gerichtet sind. Dass die Kameras von unterschiedlichen Perspektiven auf die Pflanze 22 "blicken" ist lediglich aus Darstellungsgründen so, für die vorliegende Erfindung jedoch nicht von Bedeutung. Vorzugsweise bewegt sich das Fahrzeug 20 mit konstanter Geschwindigkeit in Fahrtrichtung 23, wobei die Kameras 10a, 10b ausgebildet sind, um während der Bewegung des Fahrzeugs 20 Serien von Einzelbildern zu erfassen, die dann in den Fusionsprozessor (12 von Fig. 1, in Fig. 2a nicht gezeigt) eingespeist werden, um eine 3-D-Ergebnisdarstellung der Pflanze 22 zu erhalten.

Bei einer alternativen Implementierung wird es bevorzugt, getriggerte Aufnahmen mit konstantem Abstand zwischen den Aufnahmen durchzuführen oder eine Erfassung vorzunehmen, ob eine interessierende Pflanze im Aufnahmebereich ist, um dann ansprechend auf ein Erfassungssignal eine Aufnahme auszulösen, wenn sich eine Pflanze im Aufnahmebereich der Kameras befindet.

Wenn eine Serie von Einzelbildern erfasst wird, wird es bevorzugt, aus jedem Einzelbild der Serie sowohl der zweidimensionalen Darstellung als auch der dreidimensionalen Darstellung den Bereich zu extrahieren, der sich auf ein und dasselbe Pflanzenblatt bezieht. Von Bild zu Bild wird dieser Bereich an unterschiedlichen Stellen der Aufnahme sein, wobei diese Stellen von der Bewegungsrichtung des Fahrzeugs 20 (Fig. 2a) abhängen, wenn diese nicht durch eine vom Wind verursachte Bewegung überlagert wird. Diese Zusammenhänge können dazu verwendet werden, um zu einem Blatt gehörige Bereiche aus unterschiedlichen Aufnahmen zu extrahieren.

Die zu einem Blatt gehörigen Informationen aus verschiedenen Aufnahmen werden dann miteinander kombiniert, um die dreidimensionale Darstellung zu erhalten. So kann man mit jedem Paar von Einzelbildern gewissermaßen unabhängig voneinander gleich vorgehen, um dann die sich ergebenden dreidimensionalen Darstellung zu kombinieren, wie beispielsweise durch eine Mittelung von mehreren Werten für dieselben Koordinaten bzw. eine Aneinanderfügung von Ergebnissen, die aus unterschiedlichen Ansichten erzeugt worden sind und über unterschiedliche Bereiche eines Blatts Aufschluss geben, die in der einen Ansicht nicht sichtbar waren, dafür aber in der anderen Ansicht sichtbar sind.

Fig. 2b zeigt eine bevorzugte Implementierung der vorliegenden Erfindung, bei der die zweidimensionale Ergebnisdarstellung, die durch den Fusionsprozessor 12 geliefert wird, in einen Auswertungsprozessor 26 eingespeist wird, um je nach Anwendungsfall diverse Auswertungen durchzuführen.

Eine Auswertung kann darin bestehen, ein Pflanzenblatt als zu einer bestimmten Pflanze gehörig zu identifizieren. Dies dient beispielsweise dazu, eine Unterscheidung zwischen der zu untersuchenden Nutzpflanze, wie beispielsweise einer Zuckerrübenpflanze und auf dem Acker ebenfalls wachsenden Beikräutern herbeizuführen, um dann, nach einer Identifikation eines Krauts als Beikraut ein automatisches Jäten durchzuführen, wobei eine Jätvorrichtung ebenfalls z.B. in Form eines automatischen Greifers an dem Fahrzeug 20 befestigt ist. Die Identifikation des Pflanzenblattes findet vorzugsweise über einen Abgleich zwischen der dreidimensionalen Ergebnisdarstellung und einer Datenbank mit diversen Blattformen statt, wobei für die hinterlegte Blattform in der Datenbank, für die die beste Übereinstimmung mit der Blattform im dreidimensionalen Ergebnisbild gefunden worden ist, bestimmt wird, ob es sich hier um ein Beikraut handelt oder nicht.

Eine alternative Auswertung, die durch den Auswertungsprozessor 26 erhalten wird, besteht in der Berechnung der Fläche des Pflanzenblattes. Hierzu wird der Flächeninhalt der dreidimensionalen Blattfläche aus der dreidimensionalen Ergebnisdarstellung, die beispielsweise ein dreidimensionales Ergebnisbild ist, berechnet. Dies kann z.B. durch Integration der definierten bzw. berandeten Fläche erfolgen. Die Fläche eines Pflanzenblattes gibt Hinweis darauf, wie gut die Pflanze gewachsen ist. Damit kann auf die Qualität eines Keimlings geschlossen werden. Ferner kann durch Durchführen der Größenmessung in bestimmten zeitlichen Abständen auch der Wachstumsverlauf der einzelnen Pflanzen bestimmt werden.

Eine weitere Art und Weise der Auswertung durch den Auswertungsprozessor 26 besteht darin, die Ausrichtung des Pflanzenblattes im Raum zu bestimmen. Damit kann herausgefunden werden, ob das Blatt zur Sonne ausgerichtet ist, oder ob das Blatt eher verwelkt und nicht auf bestimmte Weise ausgerichtet ist. Im letzteren Fall würde dies auf mangelhafte Umgebungsbedingungen für die Pflanze oder ein mangelhaftes Saatgut hindeuten, während im Fall einer dezidierten Ausrichtung im Raum, wie man sie sich für eine gesunde Pflanze der Pflanzenart erwarten würde, auf gute Umgebungsbedingungen und ein gutes Saatgut geschlossen werden kann. Die Ausrichtung des Pflanzenblattes im Raum kann anhand verschiedener Kriterien bestimmt werden. Ein Kriterium besteht darin, einen Normalenvektor auf ein Blatt bzw. auf einen Abschnitt des Blattes bzw. sogar für jedes Element (Pixel bzw. Voxel) zu bestimmen, oder z.B. für alle Blattabschnitte jeweils einen Normalenvektor zu bestimmen, um dann durch Mittelung über diese in unterschiedliche Richtungen zeigenden Normalenvektoren einen resultierenden Normalenvektor zu bestimmen, dessen Richtung die Blattausrichtung ist.

Alternativ kann auch eine Ausrichtung von bestimmten markanten Strukturen, wie beispielsweise einer Mittelader oder einer Blattspitze gesucht werden, um die Blattausrichtung danach festzulegen, wie ein solches bestimmtes Element des Blattes im Raum bzw. zur Sonne zu einem bestimmten Zeitpunkt ausgerichtet ist.

Generell wird es bevorzugt, durch den Prozessor 12 aus dem zweidimensionalen Bild Informationen über eine innere Struktur des Pflanzenblattes zu extrahieren, wobei ferner eine dreidimensionale Ergebnisdarstellung geliefert wird, in der die innere Struktur des Pflanzenblattes vorhanden ist.

Eine weitere Auswertung, die durch den Auswertungsprozessor 26 erreicht werden kann, besteht in der Bestimmung der Textur des Pflanzenblattes. Hierzu werden Strukturen innerhalb des Pflanzenblattes, die in der zweidimensionalen Darstellung ersichtlich sind, da die zweidimensionale Darstellung hochauflösend ist, detektiert und in der dreidimensionalen Rekonstruktion berücksichtigt bzw. sogar eingefügt, um eine dreidimensionale Darstellung mit Textur zu erhalten. Eine Bestimmung der Textur einer Pflanze bzw. eines Pflanzenblattes liefert ebenfalls eine Aussage über die Art des Blattes, über den Gesundheitszustand des Blattes und damit auch über den Qualitätszustand des zugrunde liegenden Saatgutes.

Darüber hinaus ist der Auswertungsprozessor 26 auch in der Lage, eine Auswertung durchzuführen, um beispielsweise die Höhe eines Pflanzenblattes über einem Ackerboden zu bestimmen. Damit kann nicht nur das Wachstum eines Blattes an sich, sondern auch die Höhe einer Pflanze als weiteres Kriterium für einen Qualitätszustand eines Saatgutes bestimmt werden. Die Höhe eines Pflanzenblattes kann wiederum durch verschiedene Kriterien bestimmt werden, wie beispielsweise die Höhe der Blattspitze über dem Ackerboden oder die Höhe des Blattstiels bzw. Blattansatzes über dem Ackerboden, etc.

Bei bevorzugten Ausführungsbeispielen werden an Pflanzen die Blattfläche und die räumliche Ausrichtung der Blätter gemessen. Diese Merkmale können bei nahezu beliebigen Fremdlichtverhältnissen und selbst bei ungünstigen Windverhältnissen direkt auf dem Feld erfasst werden. Blattfläche und Stellung der Blätter sind in der Pflanzenzucht bei der sogenannten Phenotypisierung von Bedeutung. Vorzugsweise wird ein möglichst genaues 3D-Abbild von Pflanzen generiert, um dieses durch Abgleich mit einer Datenbank eindeutig einer Pflanzenart zuweisen zu können. Diese Identifikation von Pflanzen wird beispielsweise für ein automatisches Jäten auf dem Feld benötigt.

Saatguthersteller prüfen bislang die Qualität des jeweiligen Saatguts dadurch, dass diese auf Versuchsfeldern ausgesät wird und der Aufgang der Pflanzen bzw. deren Wachstum von einem menschlichen Gutachter subjektiv bewertet (bonitiert) wird. Wünschenswert ist jedoch, die Blattfläche und die Orientierung der Blätter objektiv zu ermitteln und dadurch genauere Aussagen über die Saatgutqualität zu erhalten. Die Beschreibung der Pflanzenform ist Teil der sogenannten Phenotypisierung von Pflanzen. Vorzugsweise wird die Pflanzenform nicht nur in speziellen Messkammern, sondern direkt auf dem Versuchsfeld bestimmt, selbst wenn die Blätter z.B. durch Wind stark bewegt werden.

Bei der Phenotypisierung von Pflanzen sollen Blattfläche und räumliche Ausrichtung der Blätter ermittelt werden. Mit einer herkömmlichen hochauflösenden optischen (2D) Kamera kann die Blattfläche in der Projektionsebene sehr genau erfasst werden, jedoch wird zur Ermittlung der tatsächlichen Blattfläche noch die räumliche Orientierung der Blätter benötigt. Vorzugsweise wird diese räumliche Orientierung mit einer TOF-Kamera erfasst. Zwar wird er Abstand des Blattes von der Kamera in einem Bildpunkt nur sehr ungenau im Millimeter- oder sogar Zentimeterbereich bestimmt, jedoch kann eine Ausgleichsfläche unter Verwendung von Mittelungsoperationen und/oder Glättungsoperationen in die 3D-Datenpunkte gefittet werden, woraus insgesamt die räumliche Orientierung des Blattes mit relativ hoher Genauigkeit ermittelt werden kann. Typische TOF-Kameras besitzen derzeit noch relativ wenige Pixel (z.B. 160 x 120 Pixel). Die Randkontur der Blätter soll daher mit der hochauflösenden Kamera erfasst werden. Vorzugsweise wird der lokale Winkel zwischen Ausgleichsfläche und Projektionsebene für jeden Bildpunkt berechnet. Damit kann die tatsächliche Blattfläche aus der mit der gewöhnlichen hochauflösenden Kamera ermittelten Fläche errechnet werden.

In der Regel sind Blätter keine plane Flächen, vielmehr sind diese in verschiedene Richtungen gekrümmt. Daher werden vorzugsweise Pflanzenmodelle zur Festlegung der optimalen Ausgleichsfläche eingesetzt. Diese Pflanzenmodelle sollen typische 3D-Blattformen der interessierenden Pflanzenarten bzw. einer Art möglichst exakt beschreiben. Die typische Blattform wird in die mit der TOF-Kamera ermittelten 3D-Daten eingepasst. Insgesamt wird trotz der relativ geringen 3D-Auflösung der TOF-Kamera durch die Kombination mit einer hochauflösenden (2D-) Kamera eine auf wenige Prozent genaue Ermittlung der Blattfläche möglich sein, was für die Phenotypisierung völlig ausreichend ist. Da sowohl die 2D-Bildaufnahme mit der herkömmlichen Kamera als auch die 3D-Datenaufnahme mit der TOF-Kamera in sehr kurzer Zeit (ca. 1 Millisekunde) flächig und gleichzeitig erfolgen können, ist dieses vom Umgebungslicht weitgehend unabhängige Verfahren auch auf dem Feld einsetzbar, selbst wenn starker Wind die Blätter bewegt oder die Datenaufnahme von einem Fahrzeug, z.B. einem Traktor aus erfolgt.

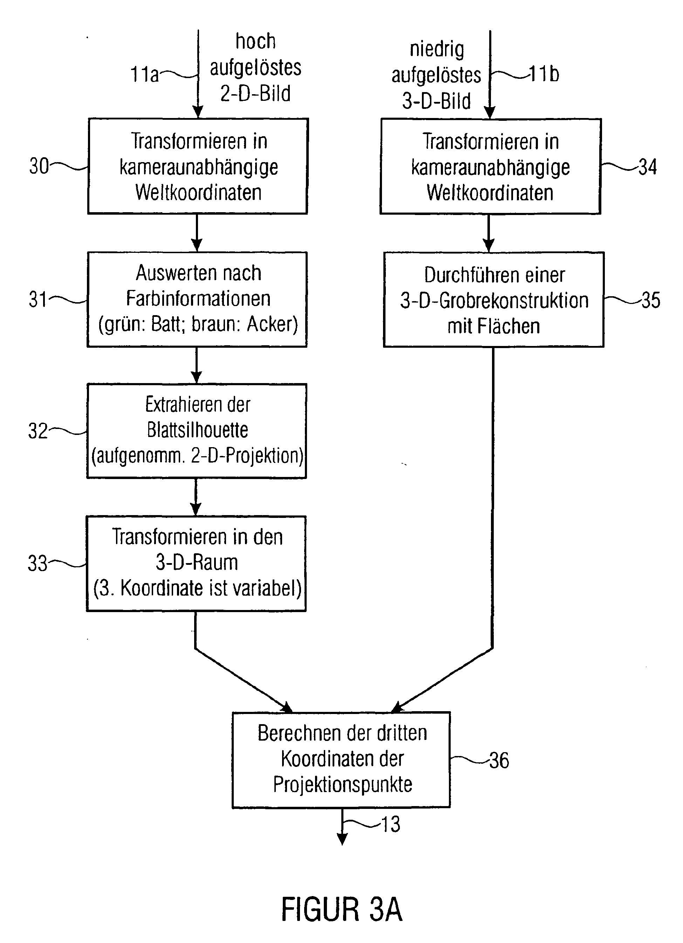

Fig. 3a zeigt ein bevorzugtes Ausführungsbeispiel einer Implementierung des Fusionsprozessors 12 von Fig. 1. Das hochaufgelöste zweidimensionale Bild wird in eine kameraunabhängige Weltkoordinatendarstellung transformiert, wie es im Schritt 30 dargestellt ist. Die Transformationsvorschrift zum Transformieren des zweidimensionalen Bildes in die kameraunabhängigen Weltkoordinaten kann durch Kalibrierung bestimmt werden, wobei diese Kalibrierung vor jedem Messlauf bzw. jeder Messfahrt und/oder nach einem Einbau der Kamera an dem Kameraträger 21 des Fahrzeugs 20 von Fig. 2a erfolgen kann und von einer Position der Kamera im Weltkoordinatensystem abhängen kann, die während der Messungen erhalten werden kann. In einem Schritt 31, der vor oder nach dem Schritt 30 stattfinden kann, wird das zweidimensionale Bild nach Farbinformationen ausgewertet, wobei z.B. grüne Bereiche als Blatt markiert werden, welche weiter untersucht werden, während braune Bereiche als Acker identifiziert werden bzw. nicht als Blatt identifiziert werden. Damit können aus der zweidimensionalen Darstellung bereits alle nicht interessierenden Bereiche eliminiert werden, nämlich, wenn Blätter zu identifizieren sind, alle Bereiche, die keine Blätter darstellen. Diese Unterscheidung findet vorzugsweise durch die Farbinformation eines Farbfotos statt.

In einem Schritt 32, welcher ebenfalls vor oder nach den Schritten 30 bzw. 31 stattfinden kann, wird aus dem zweidimensionalen Bild die Blattsilhouette eines zu bestimmenden Pflanzenblattes bestimmt. Die Blattsilhouette ist eine zusammenhängende z.B. grüne Fläche, die eine zweidimensionale Projektion darstellt, die durch die zweidimensionale Fotokamera erzeugt worden ist. Im Schritt 32 werden, wenn dieser Schritt vor dem Schritt 31 durchgeführt wird, aus dem Bild sowohl der Acker als auch gegebenenfalls andere Blätter eliminiert, wenn z.B. nur eine einzige oder mehrere unabhängige Blattsilhouetten bestimmt werden. Eine Blatteliminierung von anderen Blättern als dem interessierenden Blatt wird bei anderen Ausführungsbeispielen auch unter Verwendung von dreidimensionalen Information vorgenommen, um zwei Blätter auf unterschiedlichen Höhen zu unterscheiden, die in der zweidimensionalen Projektion überlagert sind.

In einem Schritt 33 wird eine Transformation in einem dreidimensionalen Raum durchgeführt, wobei jedoch aufgrund der Tatsache, dass das zweidimensionale Bild eine zweidimensionale Aufnahme ist, die dritte Koordinate variabel ist. Die 3D-Position eines Bildpunktes kann aufgrund der fehlenden Tiefeninformationen nicht eindeutig bestimmt werden. Vielmehr sind beliebig viele Positionen entlang des Strahls vom optischen Zentrum der Kamera aus möglich.

Die möglichen dritten Koordinaten für jeden Punkt des zweidimensionalen Bildes kann somit als auf einer Gerade liegend dargestellt werden, die durch eine Objektposition in Weltkoordinaten und einen Punkt der Silhouette definiert ist. Dabei wird der für die Definition der Geraden zu verwendende Abstand der Silhouette von dem optischen Zentrum per Kalibrierung bestimmt. Dieser Abstand ist für jede Kamera festgelegt und hängt von der eingestellten Brennweite bzw. falls vorhanden Zoomstellung des Objektivs der Kamera ab.

Diese Gerade wird somit für jeden Punkt des zweidimensionalen Bildes, wenn der Schritt 33, der in beliebiger Reihenfolge zu den Schritten 30 - 32 durchgeführt werden kann, vor dem Schritt 32 durchgeführt wird, oder wird lediglich für die Punkte der Blattsilhouette bestimmt, wenn der Schritt 33, wie es in Fig. 3a bevorzugt dargestellt ist, nach dem Schritt des Extrahierens durchgeführt wird. Für die Transformation im Schritt 33 wird die dreidimensionale Position der 2-D-Kamera während der Aufnahme vorzugsweise benötigt, wobei diese Position entweder rechnerisch ermittelt werden kann oder durch einen Positionssensor in der Kamera bei der Messung zusätzlich zu der Bilderfassung ermittelt werden kann.

Das niedrigaufgelöste dreidimensionale Bild, das auf einer Leitung 11b vorhanden ist, wird in einem Schritt 34 in eine kameraunabhängige Weltkoordinatendarstellung unter Kenntnis der Kameraposition transformiert, die dreidimensional ist, jedoch nur mit einer geringen Auflösung. Hierauf wird in einem Schritt 35 eine dreidimensionale Grobrekonstruktion des Pflanzenblattes durchgeführt, wobei aus dem dreidimensionalen Bild Flächen erzeugt werden. Diese Flächen stellen grobe Annäherungen an eine Pflanzenfläche dar und können mit verschiedenen Flächengewinnungsalgorithmen hergestellt werden, wie beispielsweise einer Tesselierung zu Polygonflächen, oder einer Flächenentscheidung auf der Basis von Informationen, die über Pixel gleich bzw. ähnlicher als eine Entscheidungsschwelle sind, wie beispielsweise Farbinformationen in der dreidimensionalen Darstellung, falls solche verfügbar sind. Alternative Flächengewinnungsalgorithmen können auch auf der Basis von Intensitätsinformationen, die sich von Pixel zu Pixel unterscheiden, arbeiten, wobei eine Fläche dadurch bestimmt wird, dass sich die Intensitätsinformationen zwischen benachbarten Pixeln um weniger als z.B. eine feste oder variable Schwelle unterscheiden.

In einem Schritt 36 werden dann die im Schritt 33 erhaltenen variablen dritten Koordinaten unter Verwendung der in der Grobrekonstruktion 35 ermittelten Flächen berechnet, um die dreidimensionale Bilddarstellung auf der Leitung 13 zu erhalten.

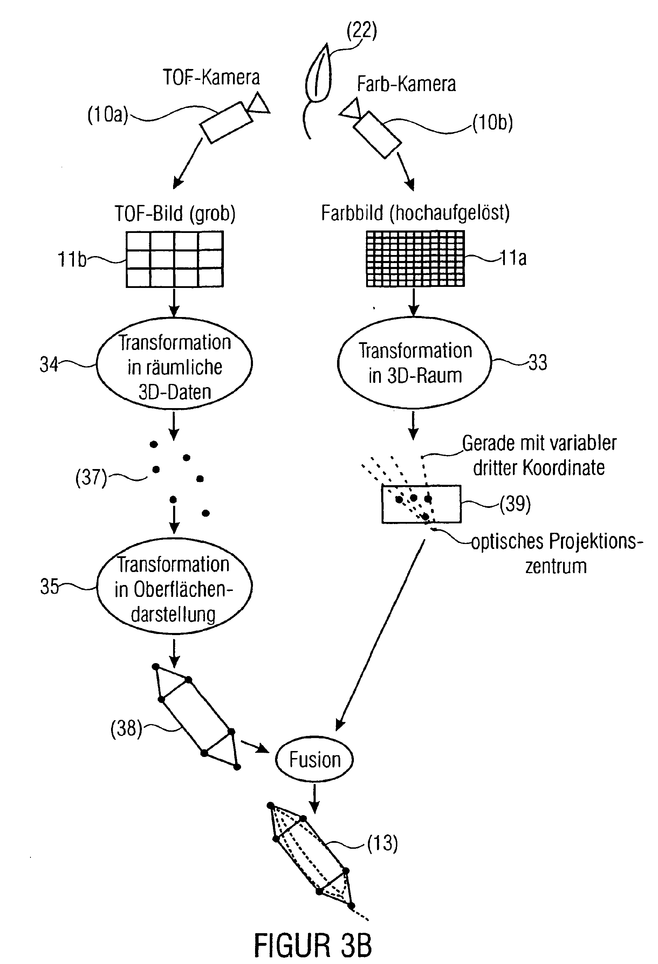

Fig. 3b zeigt als weiteres bevorzugtes Ausführungsbeispiel. eine Veranschaulichung eines Systems mit mindestens einer Time-Of-Flight-(TOF-)Messeinheit 10a sowie mindestens einer hochauflösenden herkömmlichen Kamera 10b. Beide Einheiten betrachten eine Pflanze 22 von beliebigen Positionen. Als herkömmliche Kamera wird vorzugsweise eine hochauflösende Farbkamera eingesetzt. Dies ermöglicht eine Unterscheidung zwischen (grünen) Blätter und (braunem) Ackerboden. Hierdurch kann die Blattfläche auch dann genau bestimmt werden, wenn die Blätter den Boden berühren.

Zunächst werden die Bilddaten der TOF-Messeinheit in räumliche Koordinaten 37 transformiert. Da der TOF-Sensor den Abstand von Objektpunkten vermessen kann, ist eine eindeutige Umrechnung von Bildpunkten in 3D-Weltkoordinaten möglich. Die Rechenvorschrift ist durch eine zuvor durchgeführte Kalibrierung der Kamera bekannt.

Die gewonnene 3D-Punktwolke wird anschließend in eine Oberflächenrepräsentation 38 transformiert. Je nach Anwendung sind hierfür unterschiedliche Verfahren denkbar:
● Zum einen ist eine Tesselierung (Zerlegung) der Oberfläche in mehrere lokale Oberflächenstücke möglich, indem z.B. benachbarte 3D-Punkte zu Polygonflächen verbunden werden.
● Falls Vorwissen über die Geometrie des erfassten Objekts bekannt ist, kann diese als Freiformfläche parametrisiert werden (als einfaches Beispiel ist eine Ebene verwendbar) und die Parameter an die gegebenen Messpunkte angepasst werden. Das Finden der optimalen Parameter lässt sich beispielsweise nach Definition eines Abstandsmaßes der Freiformfläche zu einem Messpunkt mit Hilfe eines Optimierungsalgorithmus lösen.
● Weiterhin ist es möglich, komplexe geometrische Modelle mit den Messpunkten abzugleichen. Beispielsweise existiert ein von der Anmelderin entwickeltes allgemeines morphologisches Modell für Pflanzenblätter, dessen optimale Parametrisierung für eine gegebene Menge von 3D-Punkten automatisch berechnet werden kann.

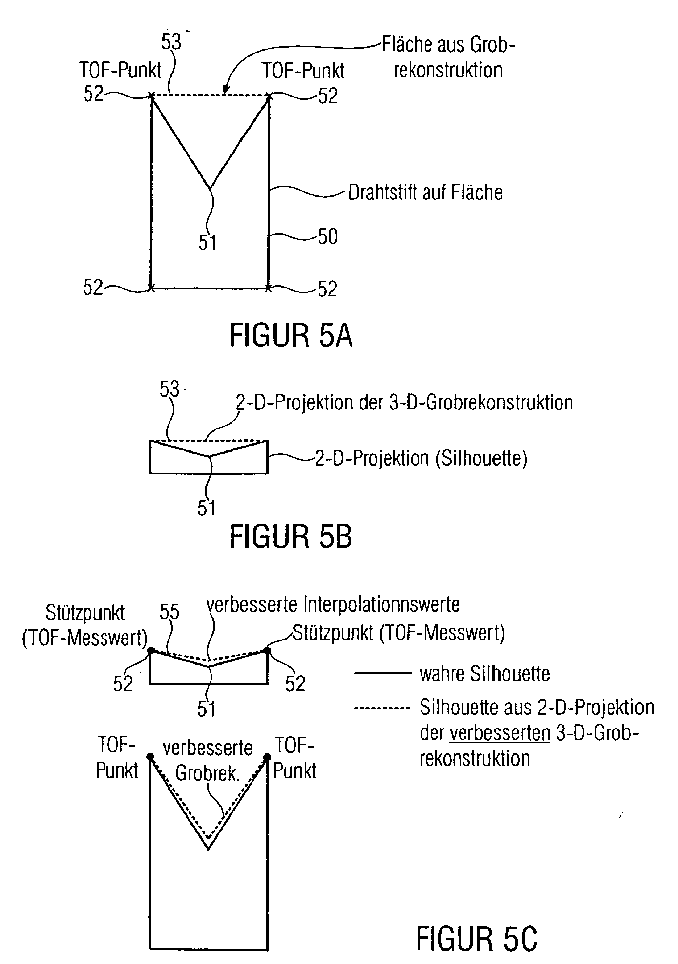

Bei der Bestimmung der Flächen bei 38 in Fig. 3b und in Schritt 35 in Fig. 3a ist darauf zu achten, dass die Punkte der dreidimensionalen Darstellung nur grob aufgelöst sind und man im allgemeinen nicht davon ausgehen kann, dass ein Punkt gerade auf der Berandung der Fläche sitzt. Daher wird eine Fläche, die durch Interpolation zwischen 3D-Punkten gewonnen wird, (fast) immer kleiner oder zufällig höchstens gleich der tatsächlichen Fläche im 3D-Raum sein. Die durch Interpolation von 3D-Punkten bestimmte Fläche wird bei einem Ausführungsbeispiel daher vergrößert, so dass die tatsächlich gesuchte Fläche in der vergrößerten Fläche "enthalten" ist. Diese Vergrößerung wird z.B. durch Extrapolation der bereits bestimmten Fläche z.B. um ein empirisches Maß vorgenommen, wie beispielsweise 10 % bis 50 % oder mehr. Die dann erhaltenen Fläche ist dann so groß, dass sie von jedem Strahl zwischen dem optischen Zentrum und der Silhouette, wie sie bei 39 in Fig. 3b eingezeichnet sind, geschnitten wird. Der Schnittpunkt des Strahls mit der extrapolierten Ebene gibt dann einen Berandungspunkt der gesuchten Fläche an. Damit kann man sagen, dass die extrapolierten Flächen, die bei 38 in Fig. 3b gezeigt sind, gewissermaßen zurechtgeschnitten werden, und zwar durch die zweidimensionale Information. Insofern stellt Fig. 3b eine Implementierung der Erfindung dar, in der die zweidimensionale Darstellung/Kontur extrapoliert wird und die extrapolierte Darstellung mit den 3D-Infromationen verbessert wird, während die Implementierung der Fig. 5a bis 5d den umgekehrten Weg geht und eine interpolierte 3D-Darstellung in den 2D-Raum umsetzt und dort mit den 2D-Daten in Form bringt.

Damit wird für jeden Punkt der Silhouette in der zweidimensionalen Darstellung ein Berandungspunkt erhalten, so dass sich eine dreidimensionale Berandung ergibt, die die dreidimensionale Ergebnisdarstellung ist, die wenigstens die Berandung aufweist. Diese Berandung hat für jeden Punkt der zweidimensionalen Kontur eine dreidimensionale Information (Schnittpunkt des Strahls mit der Gerade), wobei die Anzahl dieser Berandungspunkte höher ist als die Anzahl der Punkte der dreidimensionalen Aufnahme, die eine entsprechend gröbere (und normalerweise zu kleine) Berandung der Fläche definieren. Die dreidimensionale Ergebnisdarstellung umfasst somit z. B. nur die Berandung eines Blatts oder anderen Pflanzenabschnitts, die Berandung und die Fläche, nur die Fläche oder nur einen Teil eines Blatts oder eines anderen Pflanzenanteils. Allerdings hat die unter Verwendung der zweidimensionalen Daten gewonnene dreidimensionale Darstellung immer eine höhere dreidimensionale Auflösung der Berandung, Fläche, etc. als der entsprechende Abschnitt (Berandung, Fläche, etc.) der dreidimensionalen Aufnahme.

Sowohl die lateral Auflösung als auch die Tiefenauflösung der TOF-Kamera ist verhältnismäßig grob. Daher sind die rekonstruierten 3D-Punkte zum einen recht ungenau, zum anderen ist die rekonstruierte Fläche schlecht aufgelöst. Beispielsweise sind die Randkonturen nur grob erfasst und im Falle einer Triangulierung der Oberfläche ist diese sehr grobmaschig. Die grobe Rekonstruktion lässt sich jedoch durch Fusion mit den Daten der (Farb)kamera verfeinern (13), da herkömmliche Kameras eine verhältnismäßig höhere Auflösung besitzen.

Zur Fusion ist ebenfalls die Transformation von Bildpunkten der Farbkamera in Weltkoordinaten notwendig. Diese Umwandlungsvorschrift ist durch eine vorherige Kalibrierung der Farbkamera bekannt. Im Gegensatz zur TOF-Kamera erfasst die Farbkamera jedoch keine Tiefenwerte. Dadurch kann mit Hilfe einer Ansicht ein Bildpunkt nicht eindeutig in den 3D-Raum transformiert werden. Stattdessen sind mehrere Projektionspunkte möglich, die auf einem Strahl ausgehend vom optischen Projektionszentrum liegen (39). Eine eindeutige 3D-Position lässt sich jedoch aus dem Schnittpunkt dieser Geraden mit der rekonstruierten Oberfläche der TOF-Kamera bestimmen.

Dadurch ist es beispielsweise möglich, aus dem hochaufgelösten (Farb)bild die Objektsilhouette sehr präzise zu extrahieren und diese auf die rekonstruierte Geometrie zu projizieren. Auf diese Weise lässt sich die Randkontur der rekonstruierten Geometrie exakter bestimmen und zurechtstutzen. Durch Betrachtung des Objektes von mehreren unterschiedlichen Positionen ist ein derartiges Zurechtschneiden der Objektkontur rundum möglich. Da sich aus den (Farb-) Kamerabildern nicht nur die Randkontur, sondern auch Kanten innerhalb der Pflanze (beispielsweise resultierend aufgrund der Pflanzengeometrie oder der Oberflächentexturierung der Blätter) extrahieren lassen, ist eine derartige Verfeinerung der rekonstruierten Oberfläche nicht nur entlang der Silhouette, sondern auch im Flächeninneren möglich.

Die auf diese Weise verfeinerte Rekonstruktion ermöglicht die genaue Bestimmung von Blattfläche und Blattstand (räumliche Ausrichtung der Blätter). Weiterhin ist es möglich, aus der Rekonstruktion gewonnene geometrische Merkmale sowie Farbmerkmale für Klassifikationsanwendungen zu verwenden oder diese mit einer Modelldatenbank abzugleichen, beispielsweise um den Gesundheitszustand der Pflanze zu bestimmen.

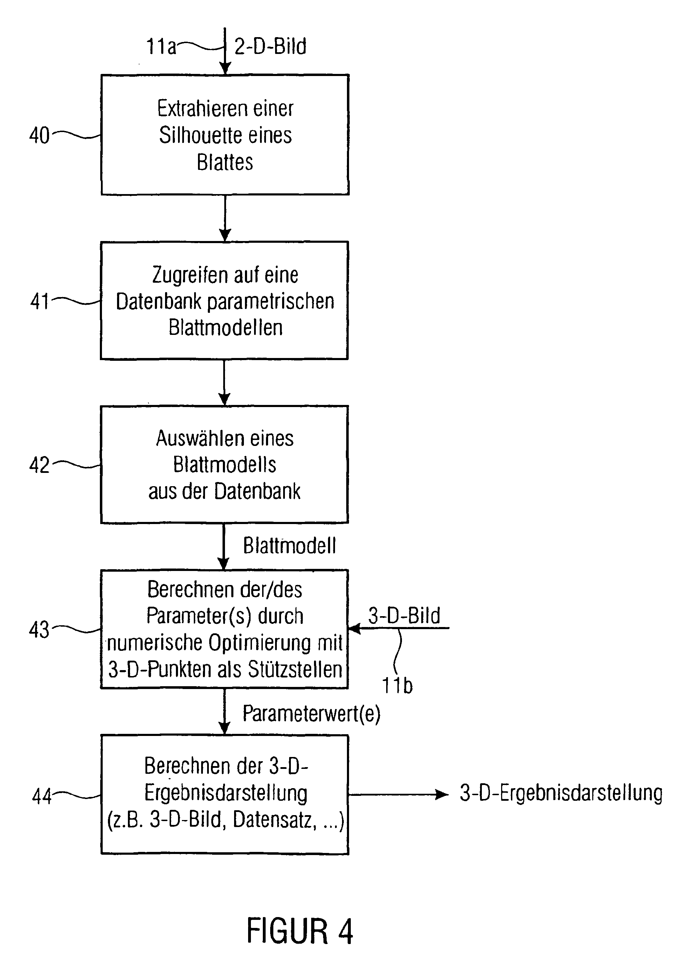

Nachfolgend wird Bezug nehmend auf Fig. 4 eine alternative Implementierung des Fusionsprozessors 12 von Fig. 1 dargestellt, bei dem Vorwissen über das herauszufindende Pflanzenblatt eingesetzt wird, um die dreidimensionale Fläche zu bestimmen.

Allgemein kann Vorwissen über das zu erfassende Bild an jeder Stelle des Erhaltens und Fusionierens der zweidimensionalen Daten eingesetzt werden.

Zunächst kann das Vorwissen über eine zu erfassende Form, wie beispielsweise ein Blatt einer Pflanze als parametrisiertes Modell der Form eingesetzt werden. Wird mit der zweidimensionalen Kamera ein unvollständiges Bild eines Blatts erfasst, weil ein Teil des Blatts z. B. verdeckt ist, so kann unter Verwendung des Vorwissens der fehlende Teil des Blatts rekonstruiert werden. Dies kann beispielsweise mit einem parametrisierten dreidimensionalen Modell erfolgen, wobei ein Parameter die Ausrichtung und ein weiterer Parameter die Größe des Blatts sein kann. Alternativ oder zusätzlich können weitere Parameter wie Länge, Breite etc. verwendet werden. Das zweidimensionale Bild des Blattes stellt ein Projektion des dreidimensionalen Blatts dar und dies Projektion wird unter Verwendung des Modells vervollständigt. Hierzu werden unter Verwendung des unvollständigen Bildes die Parameter geschätzt und mit den geschätzten Parametern dann der bzw. die fehlenden Abschnitte des zweidimensionalen Bildes ergänzt. Dann kann mit dem dreidimensionalen Bild fusioniert werden wie vorher beschrieben, nun jedoch mit einem vollständigen zweidimensionalen Bild.

Alternativ oder zusätzlich kann das Vorwissen auch dazu eingesetzt werden, um die Interpolation von dreidimensionalen Punkten zu verbessern, um die Ausgangsdaten für die Extrapolation zu erhalten, die dann durch die zweidimensionale Darstellung zugeschnitten wird. Hierzu wird unter Verwendung der dreidimensionalen Punkte, die auf der gesuchten Fläche liegen, ein dreidimensionales parametrisches Modell gespeist, das dann die Parameter, wie z. B. Länge, Breite, Größe, Position oder Lage etc. z.B. durch die Methode der kleinsten Fehlerquadrate oder ähnliche Methoden berechnet. Daraus wird ein bessere Interpolation der dreidimensionalen Punkte erhalten, weil das Modell mit den berechneten Parametern die Interpolation verbessert. Das Modell kann zusätzlich oder alternativ auch zur Extrapolation eingesetzt werden. Wie dargestellt, wird die interpolierte Fläche fast immer zu klein sein, aber nie zu groß sein. Daher wird die aus den dreidimensionalen Punkten bestimmte Fläche vergrößert. Für diese Extrapolation kann wieder das Modell verwendet werden, wobei dasselbe Modell mit denselben Parametern verwendet wird, die für die Interpolation berechnet wurden, oder wobei dann, wenn für die Interpolation ein anderes oder kein Modell verwendet wurde, für die Extrapolation eigene Parameter berechnet werden.

Die damit erhaltene verbesserte Fläche wird dann unter Verwendung der zweidimensionalen Darstellung, die ebenfalls durch Vorwissen erstellt worden ist, zurechtgeschnitten.

Das Vorwissen aus einem parametrisierten Modell kann somit eingesetzt werden, um die Transformation der dreidimensionalen Daten in die Oberflächendarstellung zu verbessern (z. B. Schritt 35 in Fig. 3a oder 3b) oder um die zweidimensionale Darstellung in den Schritten 30, 31, 32 oder 33) zu verbessern, oder um beide Maßnahmen zu verbessern, wobei im letzteren Fall vorzugsweise dasselbe Modell und dieselben Parameter verwendet werden, aber auch unterschiedliche Modelle und/oder unterschiedliche Parameter zum Einsatz kommen können.

Das zweidimensionale Bild 11a wird in einem Schritt 40 einem Extraktionsalgorithmus unterzogen, um eine Silhouette eines Blattes aus dem zweidimensionalen Bild zu extrahieren. Der Extraktionsalgorithmus kann gleich dem Extraktionsalgorithmus im Schritt 32 von Fig. 3a sein und kann darauf basieren, eine Silhouette als Umrandung einer Fläche zu definieren, die Pixel einschließt, die eine ähnliche Farbe haben.

In einem Schritt 41 wird mit der extrahierten Silhouette auf eine Datenbank mit parametrischen Blattmodellen zugegriffen. Insbesondere existieren für jedes Blattmodell eine in der Datenbank hinterlegte Muster-Silhouette, und es wird für jede in Frage kommende Muster-Silhouette ein Übereinstimmungsmaß zwischen dieser Muster-Silhouette und der extrahierten Silhouette berechnet. Dieses Übereinstimmungsmaß wird in einem Schritt 42 für jede Kandidaten-Silhouette untersucht, um dann das Blattmodell aus der Datenbank auszuwählen, dessen Muster-Silhouette am besten mit der im Schritt 40 extrahierten Silhouette übereinstimmt. Hierauf wird in einem Schritt 43 der Parameter bzw. die Parameter, falls mehrere Parameter vorhanden sind, des parametrisierten Blattmodells, das im Schritt 42 ausgewählt worden ist, berechnet, wobei hier die dreidimensionalen Punkte als Stützstellen der gewissermaßen numerischen Parameterberechnung eingesetzt werden.

Daher wird im Schritt 43 das dreidimensionale Bild 11b von der 3-D-Kamera verwendet. Der Schritt 43 liefert die Parameterwerte für das im Schritt 42 ausgewählte Blattmodell, und die dreidimensionale Ergebnisdarstellung wird in einem Schritt 44 unter Verwendung der Parameterwerte und des zugrunde liegenden Blattmodells berechnet. Falls nur eine Blattfläche benötigt wird, muss für den in Fig. 4 gezeigten Algorithmus keine Transformation in Weltkoordinaten stattfinden. Die Transformation in Weltkoordinaten, die jedoch auch mit der Ergebnisdarstellung durchgeführt werden kann, also nach der Fusion der dreidimensionalen Daten und der zweidimensionalen Daten wird dann vorzugsweise eingesetzt, wenn die Blattstellung ebenfalls berechnet werden soll. Auch für andere Auswertungen, wie beispielsweise die Blatthöhe (Abstand des Blattes vom Boden) etc. wird es bevorzugt, die dreidimensionale Ergebnisdarstellung in kameraunabhängigen Weltkoordinaten zu bestimmen.

Wie bei der zweidimensionalen Kamera in Verbindung mit Fig. 3a bzw. 3b beschrieben, wird bei dem in Fig. 4 gezeigten Ausführungsbeispiel vorzugsweise die Position der dreidimensionalen Kamera bei der Aufzeichnung des grobaufgelösten dreidimensionalen Bildes in Weltkoordinaten entweder berechnet, beispielsweise unter Verwendung der Geometrie der Aufnahmeeinrichtung des Fahrzeugs 20 von Fig. 2a oder wird die dreidimensionale Koordinate in Weltkoordinaten durch einen dreidimensionalen Positionssensor, der z.B. auf GPS oder einem anderen Verfahren zur Lokalisierung im dreidimensionalen Raum basiert, ermittelt. Bei dem in Fig. 4 gezeigten Ausführungsbeispiel wird lediglich die Position der dreidimensionalen Kamera im Raum verwendet, während die Position der zweidimensionalen Kamera im Raum für die in Fig. 4 gezeigte Implementierung vorzugsweise nicht benötigt wird.

Fig. 5a-5d zeigen weitere Implementierungen des Fusionsprozessors. So zeigt Fig. 5a eine Draufsicht auf eine Fläche 50, die eine Einkerbung 51 aufweist. Die Draufsicht auf die Fläche würde man erhalten, wenn die Fläche mit der zweidimensionalen Kamera von oben fotografiert werden würde. Die grobaufgelöste dreidimensionale Kamera erzeugt lediglich Messpunkte an relativ weit voneinander entfernten Stützstellen, die mit 51 bzw. "TOF-Punkt" bezeichnet sind. Würde eine Flächengrobrekonstruktion durchgeführt, in der benachbarte TOF-Punkte verbunden werden, so würde eine Linie 53 als Flächenbegrenzung erhalten werden, die die Einkerbung 51 vollständig ignoriert.

Wenn die in Fig. 5a gezeigte Fläche in einer zweidimensionalen Projektion dargestellt wird, so ist immer noch die Einkerbung 51 zu erkennen. Die zweidimensionale Projektion in Fig. 5b wird beispielsweise durch eine hochauflösende zweidimensionale Kamera erhalten. Würde die Fläche in Fig. 5a aus der dreidimensionalen Grobrekonstruktion projiziert werden in eine zweidimensionale Projektion bzw. Silhouette, so würde sich wieder die gestrichelt gezeichnete Begrenzungslinie 53 ergeben, die die Ecke 51 ignoriert.

In Fig. 5c ist die Situation von Fig. 5a bzw. 5b gezeigt, bei der jedoch die gestrichelte Linie 53, die eine Begrenzungslinie einer Fläche aus der Grobrekonstruktion darstellt, verbessert worden ist. Insbesondere wird die Interpolation der dreidimensionalen Werte zwischen den Stützpunkten bzw. TOF-Messwerten 52, für die dreidimensionale Daten gemessen worden sind, verbessert, indem eine verbesserte Interpolation von Werten 55 gewählt wird. Damit wird erreicht, dass die verbesserten Interpolationswerte 55 der wahren Silhouette mit der Einkerbung 51 besser entsprechen. Wenn die Draufsicht auf die Fläche mit der verbesserten Grobrekonstruktion in Fig. 5c betrachtet wird, so zeigt sich, dass aufgrund der zweidimensionalen Silhouette, die hochaufgelöst aufgenommen worden ist, die dreidimensionale Interpolation verbessert worden ist.

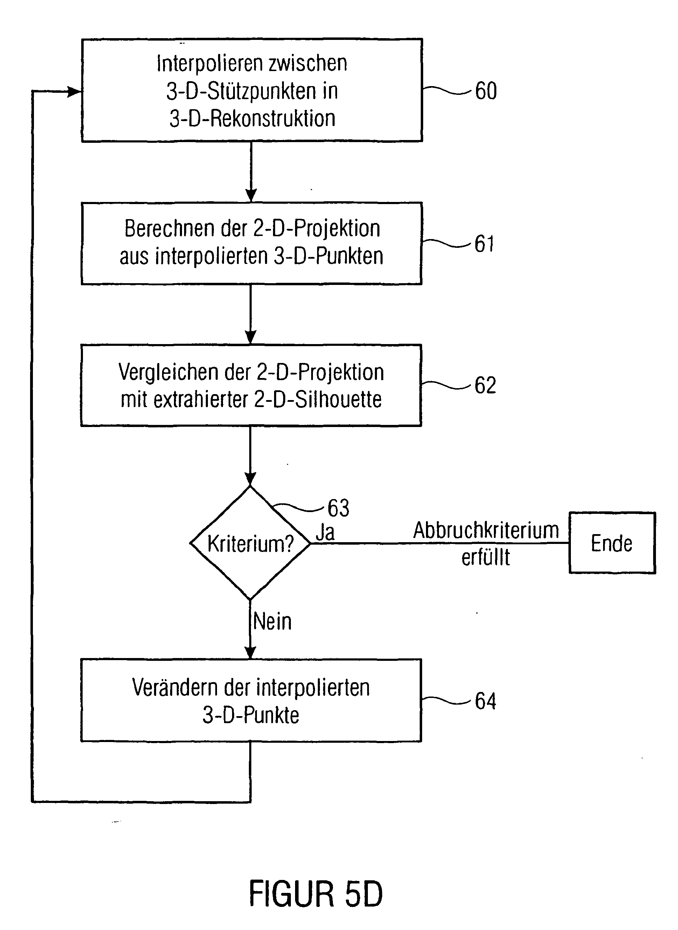

Ein vorzugsweise verwendeter Algorithmus, um die verbesserten Interpolationswerte von Fig. 5c zu erhalten, wird nachfolgend anhand von Fig. 5d erläutert. Zunächst wird in einem Schritt 60 zwischen den dreidimensionalen Stützstellen, die von der 3-D-Kamera gemessen worden sind, eine dreidimensionale Interpolation vorgenommen, um eine Begrenzungslinie einer Fläche zu erhalten. Die Interpolation kann beispielsweise eine gerade Verbindung von benachbarten dreidimensionalen Punkten oder eine irgendwie geartete aufwändigere Interpolationsvorschrift sein.

Hierauf wird in einem Schritt 61 eine zweidimensionale Projektion aus den interpolierten dreidimensionalen Punkten berechnet, wie sie der gestrichelten Linie 53 in Fig. 5b entsprechend würde. In einem Schritt 62 wird dann die zweidimensionale Projektion mit der extrahierten zweidimensionalen Silhouette verglichen. Wenn in einem Schritt 63 bestimmt wird, dass ein Abbruchkriterium nicht erfüllt ist, so wird in einem Schritt 64 eine Veränderung der interpolierten dreidimensionalen Punkte vorgenommen, und zwar so, dass die verbesserten Interpolationswerte den wahren Werten der Silhouette mehr entsprechen. Hierauf werden die Schritte 60, 61, 62 und 63 erneut durchgeführt, bis ein Abbruchkriterium erfüllt ist, das entweder darin besteht, dass eine maximale Anzahl von Iterationen durchgeführt worden ist oder das darin besteht, dass eine Abweichung zwischen den interpolierten Punkten und den wahren Punkten der Silhouette im Schritt 62 kleiner als ein vorbestimmter Schwellenwert ist.

Bei einem alternativen Ausführungsbeispiel findet statt der Umrechnung der dreidimensionalen Rekonstruktion in eine zweidimensionale Projektion eine Umrechnung der zweidimensionalen Silhouette in den dreidimensionalen Raum statt.

Dann verläuft ein Vergleich, der im Schritt 62 im zweidimensionalen Bereich stattfindet in der dreidimensionalen Domäne.

Das erfindungsgemäße Konzept eignet sich auch besonders gut für eine Anwendung in einem Gewächshaus. Im Gegensatz zu Systemen, bei denen Pflanzen im Gewächshaus z. B. über Schienen zu einer Messstation bewegt werden, was auf die Pflanzen Stress ausübt, wird es bevorzugt, dass die erfindungsgemäße Vorrichtung zur Pflanze kommt, ohne dass die Pflanze bewegt wird. Dies erfolgt beispielsweise durch eine Schienenkonstruktion oder Seilbahnkonstruktion in einem Raum des Gewächshauses oberhalb der Pflanzen oder an der Decke des Gewächshauses angebracht. Damit ist es möglich, den teuren Gewächshausplatz optimal auszunützen, weil keine Pflanzenstellfläche durch Schienen oder etwas ähnliches verschwendet wird.

Abhängig von den Gegebenheiten kann das erfindungsgemäße Verfahren in Hardware oder in Software implementiert werden. Die Implementierung kann auf einem digitalen Speichermediüm, insbesondere einer Diskette oder CD, mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computer-Programm-Produkt mit auf einem maschinenlesbaren Träger gespeichertem Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Vorrichtung zum Erfassen einer Pflanze, mit folgenden Merkmalen:
einer Einrichtung (10) zum Liefern zumindest eines zweidimensionalen Bildes eines Pflanzenblattes mit einer ersten zweidimensionalen Auflösung und zum Liefern zumindest eines dreidimensionalen Bildes des Pflanzenblattes, wobei das dreidimensionale Bild eine zweidimensionale Darstellung des Pflanzenblattes mit einer zweiten zweidimensionalen Auflösung, die kleiner als die erste zweidimensionale Auflösung ist, und für Punkte der zweidimensionalen Darstellung eine dritte Dimension des dreidimensionalen Bildes aufweist; und
einem Prozessor (12) zum Fusionieren des zweidimensionalen Bildes und des dreidimensionalen Bildes, um eine dreidimensionale Ergebnisdarstellung (13) zumindest eines Abschnitts des Pflanzenblattes zu erhalten, die für eine Anzahl von Punkten dreidimensionale Informationen hat, die größer ist als die Anzahl von Punkten des Abschnitts des dreidimensionalen Bildes (11b), für die die Informationen über die dritte Dimension vorhanden sind,
um das dreidimensionale Bild in eine Oberflächenrepräsentation zu transformieren (35), wobei der Prozessor (12) ausgebildet ist, um Vorwissen über eine erwartete Geometrie des Pflanzenblattes bei der Transformation (35) des dreidimensionalen Bildes in die Oberflächenrepräsentation zu verwenden, wobei ein dreidimensionales parametrisches Modell mit Punkten des dreidimensionalen Bildes gespeist wird, und wobei dann unter Verwendung des dreidimensionalen parametrischen Modells Parameter berechnet werden, um eine Interpolation von Punkten des dreidimensionalen Bildes, die auf der gesuchten Fläche liegen, zu erhalten,
um das zweidimensionale Bild in eine mehrdeutige dreidimensionale Darstellung zu transformieren (33), in der eine dritte Dimension mehrdeutig ist und auf Punkte auf einem Strahl ausgehend von einem Projektionszentrum eingeschränkt ist, und
um eine eindeutige dritte Dimension durch Berechnen eines Schnittpunkts des Strahls mit der Oberflächenrepräsentation zu bestimmen (36).

2. Vorrichtung nach Anspruch 1, bei der der Prozessor ausgebildet ist, um bei der Erzeugung der Oberflächenrepräsentation eine aus dem dreidimensionalen Bild erzeugt Fläche durch Extrapolation zu vergrößern, so dass eine gesuchte dreidimensionale Fläche in der durch Extrapolation vergrößerten Fläche enthalten ist, und
wobei Schnittpunkte der Strahlen Berandungspunkte der gesuchten dreidimensionalen Fläche angeben, so dass die durch Extrapolation vergrößerte Fläche unter Verwendung der Schnittpunkte zurechtgeschnitten wird, um die gesuchte dreidimensionale Fläche zu erhalten.

3. Vorrichtung nach Anspruch 1 oder 2, bei der zur Erzeugung der Flächen aus dem dreidimensionalen Bild eine Interpolation von Punkten des dreidimensionalen Bildes vorgenommen wird

4. Vorrichtung nach Anspruch 2, bei der die Extrapolation so vorgenommen wird, dass die aus dem dreidimensionalen Bild erzeugte Fläche um ein Maß vergrößert wird, das zwischen 10 % und 50% der aus dem dreidimensionalen Bild erzeugten Fläche liegt oder mehr beträgt.

5. Vorrichtung nach einem der Ansprüche 1 bis 4, bei der die Einrichtung (10) zum Liefern zumindest eine 2-D-Kamera (10a) zum Erfassen des zweidimensionalen Bildes aufweist, die als eine optische Farbkamera ausgebildet sein kann, oder
bei der die Einrichtung (10) zum Liefern zumindest eine 3-D-Kamera zum Erfassen des dreidimensionalen Bildes aufweist, wobei die Informationen über die dritte Dimension des dreidimensionalen Bildes Entfernungswerte zwischen Punkten des dreidimensionalen Bildes und der dreidimensionalen Kamera umfassen, wobei die dreidimensionale Kamera eine TOF-Kamera sein kann.

6. Vorrichtung nach einem der Ansprüche 1 bis 5, die ferner folgende Merkmale aufweist:
ein Fahrzeug (20), das ausgebildet ist, um auf einem Feld oder Acker oder in einem Gewächshaus zu fahren, wobei an dem Fahrzeug eine 2-D-Kamera (10a) und eine 3-D-Kamera (10b) angebracht sind.

7. Vorrichtung nach einem der vorhergehenden Ansprüche,
bei der eine 2-D-Kamera (10a) und eine 3-D-Kamera (10b) ausgebildet sind, um jeweils eine Serie von Einzelbildern des Pflanzenblattes zu erfassen, wobei eine Erfassungszeit für ein Einzelbild kleiner als 50 ms ist.

8. Vorrichtung nach einem der vorhergehenden Ansprüche, bei der der Prozessor (12) ausgebildet ist,
um mit dem dreidimensionalen Bild eine dreidimensionale Grobrekonstruktion des Pflanzenblattes zu berechnen (35),
um aus dem zweidimensionalen Bild eine zweidimensionale Silhouette des Pflanzenblattes zu extrahieren (32), und
um unter Verwendung der zweidimensionalen Silhouette die dreidimensionale Grobrekonstruktion zu verfeinern (36).

9. Vorrichtung nach Anspruch 8, bei der der Prozessor (12) ausgebildet, ist um die dreidimensionale Grobrekonstruktion (35) so zu verfeinern, dass eine zweidimensionale Silhouette der verfeinerten Grobrekonstruktion mit der extrahierten Silhouette besser übereinstimmt als eine zweidimensionale Silhouette der dreidimensionalen Grobrekonstruktion, oder
dass eine dreidimensionale Rekonstruktion der extrahierten Silhouette mit der verfeinerten dreidimensionalen Rekonstruktion besser übereinstimmt als mit der dreidimensionalen Grobrekonstruktion vor der Verfeinerung.

10. Vorrichtung nach einem der vorhergehenden Ansprüche,
bei der eine 2-D-Kamera und eine 3-D-Kamera ausgebildet sind, um für das Pflanzenblatt jeweils wenigstens zwei Einzelbilder aus jeweils unterschiedlichen Aufnahmerichtungen zu erzeugen, und
bei der der Prozessor (12) ausgebildet ist, um bei der Erzeugung der dreidimensionalen Ergebnisdarstellung die wenigstens zwei Einzelbilder der beiden Kameras zu verwenden.

11. Vorrichtung nach einem der vorhergehenden Ansprüche, bei der der Prozessor (12) ausgebildet ist, um aus der dreidimensionalen Ergebnisdarstellung eine Fläche des Pflanzenblattes oder eine Stellung des Pflanzenblatts im dreidimensionalen Raum zu berechnen.

12. Vorrichtung nach einem der vorhergehenden Ansprüche, die ferner einen Kalibrierer aufweist, der ausgebildet ist, um für eine 2-D-Kamera und eine 3-D-Kamera jeweils eine Rechenvorschrift bereitzustellen, mit der Koordinaten des zweidimensionalen Bildes der 2-D-Kamera und Koordinaten des dreidimensionalen Bildes der 3-D-Kamera in ein einheitliches Weltkoordinatensystem umrechenbar sind,
wobei der Prozessor (12) ausgebildet ist, um das zweidimensionale Bild und das dreidimensionale Bild in zweidimensionale Weltkoordinaten bzw. dreidimensionale Weltkoordinaten umzusetzen.

13. Vorrichtung nach einem der vorhergehenden Ansprüche,
bei der der Prozessor (12) ausgebildet ist, um Vorwissen über eine erwartete Geometrie des Pflanzenblattes bei einer Erzeugung oder Transformation (33) des zweidimensionalen Bildes in die mehrdeutige dreidimensionale Darstellung zu verwenden (41).

14. Vorrichtung nach einem der Ansprüche 1 bis 13, bei der der Prozessor (12) ausgebildet ist, um einen Umriss des Pflanzenblattes aus der zweidimensionalen Darstellung zu extrahieren (40),
um unter Verwendung des Umrisses eine parametrisierte Fläche aus einer Datenbank mit Vorwissen über eine erwartete Geometrie des Pflanzenblattes zu extrahieren (41, 42), und
um unter Verwendung der dreidimensionalen Darstellung einen oder mehrere Parameter für die parametrisierte Fläche zu berechnen (43), um die Ergebnisdarstellung zu erhalten (44).

15. Vorrichtung nach einem der vorhergehenden Ansprüche,
bei der der Prozessor (12) ausgebildet ist, um unter Verwendung einer Farbinformation des zweidimensionalen Bildes einen Umriss oder eine Silhouette des Pflanzenblattes aus dem zweidimensionalen Bild zu extrahieren (31).

16. Vorrichtung nach einem der vorhergehenden Ansprüche,
bei der der Prozessor (12) ausgebildet ist, um aus dem zweidimensionalen Bild Informationen über eine innere Struktur des Pflanzenblattes zu extrahieren, und
um eine dreidimensionale Ergebnisdarstellung zu liefern, in der die innere Struktur des Pflanzenblattes vorhanden ist.

17. Vorrichtung nach einem der vorhergehenden Ansprüche, bei der der Abschnitt des Pflanzenblatts eine Umrandung des Pflanzenblatts ist.

18. Verfahren zum Erfassen einer Pflanze, mit folgenden Schritten:
Liefern (10) eines zweidimensionalen Bildes eines Pflanzenblattes mit einer ersten zweidimensionalen Auflösung und zum Liefern eines dreidimensionalen Bildes des Pflanzenblattes, wobei das dreidimensionale Bild eine zweidimensionale Darstellung des Pflanzenblattes mit einer zweiten zweidimensionalen Auflösung, die kleiner als die erste zweidimensionale Auflösung ist, und für Punkte der zweidimensionalen Darstellung eine dritte Dimension des dreidimensionalen Bildes aufweist; und
Fusionieren (12) des zweidimensionalen Bildes und des dreidimensionalen Bildes, um eine dreidimensionale Ergebnisdarstellung (13) zumindest eines Abschnitts des Pflanzenblattes zu erhalten, die für eine Anzahl von Punkten dreidimensionale Informationen hat, die größer ist als die Anzahl von Punkten des Abschnitts dreidimensionalen Bildes (11b), für die die Informationen über die dritte Dimension vorhanden sind,
um das dreidimensionale Bild in eine Oberflächenrepräsentation zu transformieren (35), wobei Vorwissen über eine erwartete Geometrie des Pflanzenblattes bei der Transformation (35) des dreidimensionalen Bildes in die Oberflächenrepräsentation zu verwenden, wobei ein dreidimensionales parametrisches Modell mit Punkten des dreidimensionalen Bildes gespeist wird, und wobei dann unter Verwendung des dreidimensionalen parametrischen Modells Parameter berechnet werden, um eine Interpolation von Punkten des dreidimensionalen Bildes, die auf der gesuchten Fläche liegen, zu erhalten
um das zweidimensionale Bild in eine mehrdeutige dreidimensionale Darstellung zu transformieren (33), in der eine dritte Dimension mehrdeutig ist und auf Punkte auf einem Strahl ausgehend von einem Projektionszentrum eingeschränkt ist, und
um eine eindeutige dritte Dimension durch Berechnen eines Schnittpunkts des Strahls mit der Oberflächenrepräsentation zu bestimmen (36).

19. Computer-Programm mit einem Programmcode zum Durchführen eines Verfahrens zum Erfassen einer Pflanze gemäß Patentanspruch 18, wenn das Computer-Programm auf einem Computer abläuft.

## Claims

1. A device for detecting a plant, comprising:
a means (10) for providing at least one two-dimensional image of a plant leaf with a first two-dimensional resolution, and for providing at least one three-dimensional image of the plant leaf, the three-dimensional image comprising a two-dimensional representation of the plant leaf with a second two-dimensional resolution which is smaller than the first two-dimensional resolution, and comprising a third dimension of the three-dimensional image for points of the two-dimensional representation; and
a processor (12) for merging the two-dimensional image and the three-dimensional image so as to obtain a three-dimensional result representation (13) of at least a portion of the plant leaf, said result representation (13) comprising three-dimensional information for a number of points which is larger than the number of points of the portion of the three-dimensional image (11b) for which the information about the third dimension exists,
to transform the three-dimensional image to a surface representation (35), wherein the processor (12) is implemented to employ foreknowledge about an expected geometry of the plant leaf in the transformation (35) of the three-dimensional image to the surface representation, wherein a three-dimensional parametric model is fed with points of the three-dimensional image, and wherein parameters are calculated while using the three-dimensional parametric model so as to obtain an interpolation of points of the three-dimensional image which are located on the sought-for area,
to transform the two-dimensional image to a multi-valued three-dimensional representation (33) wherein a third dimension is multi-valued and is restricted to having points on a beam starting from a projection center, and
to determine an unambiguous third dimension by calculating an intersection point of the beam with the surface representation (36).

2. The device as claimed in claim 1, wherein the processor is implemented to enlarge, by extrapolation, an area generated from the three-dimensional image during generation of the surface representation, such that a sought-for three-dimensional area is contained in the area enlarged by extrapolation, and
wherein intersection points of the beams indicate border points of the sought-for three-dimensional area, such that the area enlarged by extrapolation is cut by using the intersection points for obtaining the sought-for three-dimensional area.

3. The device as claimed in claim 1 or 2, wherein for generating the areas from the three dimensional image an interpolation of points of the three-dimensional image is performed.

4. The device as claimed in claim 2, wherein the extrapolation is performed such that the area generated from the three-dimensional image is enlarged by a measure between 10 % and 50 % of the area generated from the three-dimensional image or more.

5. The device as claimed in one of claims 1 to 4, wherein the means (10) for providing comprises at least one 2D camera (10a) for detecting the two-dimensional image which may be implemented as an optical color camera, or
wherein the means (10) for providing comprises at least one 3D camera for detecting the three-dimensional image, the information about the third dimension of the three-dimensional image comprising distance values between points of the three-dimensional image and the three-dimensional camera, it being possible for the three-dimensional camera to be a TOF camera.

6. The device as claimed in one of claims 1 to 5, further comprising:
a vehicle (20) implemented to travel on a field or in a greenhouse, a 2D camera (10a) and a 3D camera (10b) being mounted on the vehicle.

7. The device as claimed in any of the previous claims,
wherein a 2D camera (10a) and a 3D camera (10b) are implemented to detect a series of single frames of the plant leaf in each case, a detection time for a single frame being shorter than 50 ms.

8. The device as claimed in any of the previous claims, wherein the processor (12) is implemented
to calculate a three-dimensional coarse reconstruction of the plant leaf using the three-dimensional image (35),
to extract a two-dimensional silhouette of the plant leaf from the two-dimensional image (32), and
to refine the three-dimensional coarse reconstruction using the two-dimensional silhouette (36).

9. The device as claimed in claim 8, wherein the processor (12) is implemented to refine the three-dimensional coarse reconstruction (35) such that a two-dimensional silhouette of the refined coarse construction better matches the extracted silhouette than a two-dimensional silhouette of the three-dimensional coarse reconstruction, or
that a three-dimensional reconstruction of the extracted silhouette better matches the refined three-dimensional reconstruction than it matches the three-dimensional coarse reconstruction prior to the refinement.

10. The device as claimed in any of the previous claims,
wherein a 2D camera and a 3D camera are implemented to generate, for the plant leaf, at least two single frames from different capturing directions in each case, and
wherein the processor (12) is implemented to use the at least two single frames of the two cameras for creating the three-dimensional result representation.

11. The device as claimed in any of the previous claims, wherein the processor (12) is implemented to calculate, from the three-dimensional result representation, an area of the plant leaf or a position of the plant leaf within the three-dimensional space.

12. The device as claimed in any of the previous claims, further comprising a calibrator implemented to provide, for a 2D camera and a 3D camera, one calculation specification in each case with which coordinates of the two-dimensional image of the 2D camera and coordinates of the three-dimensional image of the 3D camera may be converted to a uniform world coordinate system,
the processor (12) being implemented to convert the two-dimensional image and the three-dimensional image to two-dimensional world coordinates and three-dimensional world coordinates, respectively.

13. The device as claimed in any of the previous claims,
wherein the processor (12) is implemented to employ foreknowledge about an expected geometry of the plant leaf during generation or transformation (33) of the two-dimensional image into the multi-valued three-dimensional representation (41).

14. The device as claimed in one of claims 1 to 13, wherein the processor (12) is implemented to extract an outline of the plant leaf from the two-dimensional representation (40),
to extract a parameterized area from a database by using the outline with foreknowledge about an expected geometry of the plant leaf (41, 42), and
to calculate one or several parameters for the parameterized area by using the three-dimensional representation (43) so as to obtain the result representation (44).

15. The device as claimed in any of the previous claims,
wherein the processor (12) is implemented to extract an outline or a silhouette of the plant leaf from the two-dimensional image by using color information of the two-dimensional image (31).

16. The device as claimed in any of the previous claims,
wherein the processor (12) is implemented to extract, from the two-dimensional image, information about an inner structure of the plant leaf, and
to provide a three-dimensional result representation in which the inner structure of the plant leaf is included.

17. The device as claimed in any of the previous claims, wherein the portion of the plant leaf is a border of the plant leaf.

18. A method of detecting a plant, comprising:
providing (10) a two-dimensional image of a plant leaf with a first two-dimensional resolution, and providing a three-dimensional image of the plant leaf, the three-dimensional image comprising a two-dimensional representation of the plant leaf with a second two-dimensional resolution which is smaller than the first two-dimensional resolution, and comprising a third dimension of the three-dimensional image for points of the two-dimensional representation; and
merging (12) the two-dimensional image and the three-dimensional image so as to obtain a three-dimensional result representation (13) of at least a portion of the plant leaf, said result representation (13) comprising three-dimensional information for a number of points which is larger than the number of points of the portion of the three-dimensional image (11b) for which the information about the third dimension exists,
to transform the three-dimensional image to a surface representation (35), wherein foreknowledge about an expected geometry of the plant leaf is employed in the transformation (35) of the three-dimensional image to the surface representation, wherein a three-dimensional parametric model is fed with points of the three-dimensional image, and wherein parameters are calculated while using the three-dimensional parametric model so as to obtain an interpolation of points of the three-dimensional image which are located on the sought-for area,
to transform the two-dimensional image to a multi-valued three-dimensional representation (33) wherein a third dimension is multi-valued and is restricted to having points on a beam starting from a projection center, and
to determine an unambiguous third dimension by calculating an intersection point of the beam with the surface representation (36).

19. A computer program comprising a program code for performing a method of detecting a plant as claimed in claim 18, when the computer program runs on a computer.

## Revendications

1. Dispositif de prise de vue d'une plante, aux caractéristiques suivantes:
un moyen (10) pour fournir au moins une image bidimensionnelle d'une feuille de plante avec une première résolution bidimensionnelle et pour fournir au moins une image tridimensionnelle de la feuille de plante, l'image tridimensionnelle présentant une représentation bidimensionnelle de la feuille de plante avec une deuxième résolution bidimensionnelle qui est inférieure à la première résolution bidimensionnelle et, pour des points de la représentation bidimensionnelle, une troisième dimension de l'image tridimensionnelle; et
un processeur (12) destiné à fusionner l'image bidimensionnelle et l'image tridimensionnelle, pour obtenir une représentation de résultat tridimensionnelle (13) d'au moins un segment de la feuille de plante ayant des informations tridimensionnelles pour un nombre de points qui est supérieur au nombre de points du segment de l'image tridimensionnelle (11b) pour lequel sont présentes les informations sur la troisième dimension,
pour transformer (35) l'image tridimensionnelle en une représentation superficielle, le processeur (12) étant réalisé pour utiliser les connaissances préalables sur une géométrie prévue de la feuille de plante lors de la transformation (35) de l'image tridimensionnelle en représentation superficielle, un modèle paramétrique tridimensionnel étant alimenté par des points de l'image tridimensionnelle, et à l'aide du modèle paramétrique tridimensionnel étant alors calculés des paramètres pour obtenir une interpolation de points de l'image tridimensionnelle qui se situent sur la surface recherchée,
pour transformer (33) l'image bidimensionnelle en une représentation tridimensionnelle ambigüe dans laquelle une troisième dimension est ambiguë et est limitée à des points sur un rayon partant d'un centre de projection, et
pour déterminer (36) une troisième dimension univoque en calculant un point d'intersection du rayon avec la représentation superficielle.

2. Dispositif selon la revendication 1, dans lequel le processeur est réalisé pour agrandir lors de la génération de la représentation superficielle, une surface générée à partir de l'image tridimensionnelle par extrapolation, de sorte qu'une surface tridimensionnelle recherchée soit contenue dans la surface agrandie par extrapolation, et
dans lequel les points d'intersection des rayons indiquent des points de bordure de la surface tridimensionnelle recherchée, de sorte que la surface agrandie par extrapolation soit coupée à l'aide des points d'intersection, pour obtenir la surface tridimensionnelle recherchée.

3. Dispositif selon la revendication 1 ou 2, dans lequel il est procédé, pour générer les surfaces à partir de l'image tridimensionnelle, à une interpolation de points de l'image tridimensionnelle.

4. Dispositif selon la revendication 2, dans lequel il est procédé à l'extrapolation de sorte que la surface générée à partir de l'image tridimensionnelle soit agrandie d'une mesure qui est comprise entre 10% et 50% ou plus de la surface générée à partir de l'image tridimensionnelle.

5. Dispositif selon l'une des revendications 1 à 4, dans lequel le moyen (10) destiné à fournir présente au moins une caméra 2D (10a) destinée à capter l'image bidimensionnelle, laquelle peut être réalisée sous forme de caméra couleur optique, ou
dans lequel le moyen (10) destiné à fournir présente au moins une caméra 3D destinée à capter l'image tridimensionnelle, les informations sur la troisième dimension de l'image tridimensionnelle comprenant des valeurs de distance entre points de l'image tridimensionnelle et de la caméra tridimensionnelle, la caméra tridimensionnelle pouvant être une caméra TOF.

6. Dispositif selon l'une des revendications 1 à 5, présentant par ailleurs les caractéristiques suivantes:
un véhicule (20) qui est réalisé pour rouler sur un champ ou terrain ou dans une serre, sur le véhicule étant placées une caméra 2D (10a) et une caméra 3D (lOb).

7. Dispositif selon l'une des revendications précédentes,
dans lequel une caméra 2D (10a) et une caméra 3D (10b) sont réalisées pour capter, chacune, une série d'images individuelles de la feuille de plante, un temps de capture d'une image individuelle étant inférieur à 50 ms.

8. Dispositif selon l'une des revendications précédentes, dans lequel le processeur (12) est réalisé
pour calculer (35), à l'aide de l'image tridimensionnelle, une reconstruction approximative tridimensionnelle de la feuille de plante,
pour extraire (32) de l'image bidimensionnelle une silhouette bidimensionnelle de la feuille de plante, et
pour raffiner (36), à l'aide de la silhouette bidimensionnelle, la reconstruction approximative tridimensionnelle.

9. Dispositif selon la revendication 8, dans lequel le processeur (12) est réalisé pour raffiner la reconstruction approximative tridimensionnelle (35) de sorte qu'une silhouette bidimensionnelle de la reconstruction approximative tridimensionnelle raffinée coïncide mieux avec la silhouette extraite qu'une silhouette bidimensionnelle de la reconstruction approximative tridimensionnelle, ou
qu'une reconstruction tridimensionnelle de la silhouette extraite coïncide mieux avec la reconstruction tridimensionnelle raffinée qu'avec la reconstruction approximative tridimensionnelle avant le raffinage.

10. Dispositif selon l'une des revendications précédentes,
dans lequel une caméra 2D et une caméra 3D sont réalisées pour générer, pour la feuille de plante, chaque fois au moins deux images individuelles à partir de chaque fois des directions de prise de vue différentes, et
dans lequel le processeur (12) est réalisé pour utiliser, lors de la génération de la représentation de résultat tridimensionnelle, les au moins deux images individuelles des deux caméras.

11. Dispositif selon l'une des revendications précédentes, dans lequel le processeur (12) est réalisé pour calculer, à partir de la représentation de résultat tridimensionnelle, une surface de la feuille de plante ou une position de la feuille de plante dans l'espace tridimensionnel.

12. Dispositif selon l'une des revendications précédentes, présentant par ailleurs un étalonneur qui est réalisé pour mettre à disposition, pour une caméra 2D et une caméra 3D, chaque fois une règle de calcul par laquelle peuvent être recalculées des cordonnées de l'image bidimensionnelle de la caméra 2D et les cordonnées de l'image tridimensionnelle de la caméra 3D dans un système de cordonnées mondiales unitaire,
le processeur (12) étant réalisé pour convertir l'image bidimensionnelle et l'image tridimensionnelle en cordonnées mondiales bidimensionnelles ou en cordonnées mondiales tridimensionnelles.

13. Dispositif selon l'une des revendications précédentes,
dans lequel le processeur (12) est réalisé pour utiliser (41) les connaissances préliminaires sur une géométrie attendue de la feuille de plante lors d'une génération ou transformation (33) de l'image bidimensionnelle en représentation tridimensionnelle ambigüe.

14. Dispositif selon l'une des revendications 1 à 13, dans lequel le processeur (12) est réalisé pour extraire (40) un contour de la feuille de plante de la représentation bidimensionnelle,
pour extraire (41, 42), à l'aide du contour, une surface paramétrisée d'une banque de données à connaissances préliminaires sur une géométrie attendue de la feuille de plante, et
pour calculer (43), à l'aide de la représentation tridimensionnelle, un ou plusieurs paramètres pour la surface paramétrisée, pour obtenir (44) la représentation de résultat.

15. Dispositif selon l'une des revendications précédentes,
dans lequel le processeur (12) est réalisé pour extraire (31), à l'aide d'une information de couleur de l'image bidimensionnelle, un contour ou une silhouette de la feuille de plante de l'image bidimensionnelle.

16. Dispositif selon l'une des revendications précédentes,
dans lequel le processeur (12) est réalisé pour extraire de l'image bidimensionnelle des informations sur une structure intérieure de la feuille de plante, et
pour fournir une représentation de résultat tridimensionnelle dans laquelle est présente la structure intérieure de la feuille de plante.

17. Dispositif selon l'une des revendications précédentes, dans lequel le segment de la feuille de plante est un bord de la feuille de plante.

18. Procédé pour la prise de vue d'une plante, aux étapes suivantes:
fournir (10) une image bidimensionnelle d'une feuille de plante avec une première résolution bidimensionnelle et pour fournir une image tridimensionnelle de la feuille de plante, l'image tridimensionnelle présentant une représentation bidimensionnelle de la feuille de plante avec une deuxième résolution bidimensionnelle qui est inférieure à la première résolution bidimensionnelle et, pour des points de la représentation bidimensionnelle, une troisième dimension de l'image tridimensionnelle; et
fusionner (12) l'image bidimensionnelle et l'image tridimensionnelle, pour obtenir une représentation de résultat tridimensionnelle (13) d'au moins un segment de la feuille de plante ayant des informations tridimensionnelles pour un nombre de points qui est supérieur au nombre de points du segment de l'image tridimensionnelle (11b) pour lequel sont présentes les informations sur la troisième dimension,
pour transformer (35) l'image tridimensionnelle en une représentation superficielle, les connaissances préalables sur une géométrie prévue de la feuille de plante étant utilisées lors de la transformation (35) de l'image tridimensionnelle en représentation superficielle, un modèle paramétrique tridimensionnel étant alimenté par des points de l'image tridimensionnelle, et à l'aide du modèle paramétrique tridimensionnel étant alors calculés des paramètres pour obtenir une interpolation de points de l'image tridimensionnelle qui se situent sur la surface recherchée,
pour transformer (33) l'image bidimensionnelle en une représentation tridimensionnelle ambigüe dans laquelle une troisième dimension est ambigüe et est limitée à des points sur un rayon partant d'un centre de projection, et
pour déterminer (36) une troisième dimension univoque en calculant un point d'intersection du rayon avec la représentation superficielle.

19. Programme d'ordinateur avec un code de programme pour réaliser un procédé pour la prise de vue d'une plante selon la revendication 18 lorsque le programme d'ordinateur est exécuté sur un ordinateur.
